# EUROPEAN PATENT APPLICATION

(11) **EP 4 647 720 A1**
(43) Date of publication of application: **12.11.2025**
(21) Application number: 24830157.4
(22) Date of filing: 07.05.2024
(51) Int. Cl.: G01C 21/00, G01C 21/36, G01C 21/30

(54) **MAP DATA PROCESSING METHOD AND APPARATUS, ELECTRONIC DEVICE, COMPUTER READABLE STORAGE MEDIUM, AND COMPUTER PROGRAM PRODUCT**

(30) Priority: 30.06.2023 CN 202310804218
(71) Applicant: Tencent Technology (Shenzhen) Company Limited, Shenzhen, Guangdong 518057 (CN)
(72) Inventor: ZHANG, Honglong, Shenzhen, Guangdong 518057 (CN); JIN, Gang, Shenzhen, Guangdong 518057 (CN); HU, Jisong, Shenzhen, Guangdong 518057 (CN)
(74) Representative: Nederlandsch Octrooibureau
(86) International application number: PCT/CN2024/091355
(87) International publication number: WO 2025/001509

(57) **Abstract**

The present application relates to the field of Internet of Vehicles and the field of intelligent transportation, and provides a map data processing method and apparatus, an electronic device, a computer readable storage medium, and a computer program product. The method comprises: in the process of a vehicle travelling on the basis of a target navigation path, an automatic driving domain receives region information sent by a cockpit domain; in a case that the vehicle is travelling in a first geographic region, when it is determined, on the basis of the region information, that the vehicle allows for automatic driving in a second geographic region and when map data of the second geographic region stored in the automatic driving domain is not map data of the latest version, obtaining the map data of the latest version of the second geographic region; and starting an automatic driving function of the vehicle on the basis of the map data of the latest version of the second geographic region.

## Description

### RELATED APPLICATION

This application is filed based upon and claims priority to Chinese Patent Application No. 202310804218.1, filed on June 30, 2023, which is hereby incorporated by reference in its entirety.

### FIELD OF THE TECHNOLOGY

This application relates to the field of computer technologies, and in particular, to a map data processing method and apparatus, an electronic device, a computer-readable storage medium, and a computer program product.

### BACKGROUND OF THE DISCLOSURE

With the development of computer technologies, map data is widely used in a plurality of fields such as autonomous driving and navigation. Because a real geographical environment continuously changes, the map data usually needs to be continuously updated, so that the map data can objectively and accurately describe the real geographical environment.

In the related art, when the map data is updated, full update is usually performed on the map data based on a preset update frequency. This results in low data update efficiency and low autonomous driving safety.

### SUMMARY

Embodiments of this application provide a map data processing method and apparatus, an electronic device, a computer-readable storage medium, and a computer program product, to effectively improve map data update efficiency, improving autonomous driving safety.

Technical solutions of the embodiments of this application are implemented as follows.

An embodiment of this application provides a map data processing method based on a vehicle control system. The vehicle control system includes an autonomous driving domain for controlling autonomous driving of a vehicle and a cockpit domain for controlling interaction in the vehicle. The method includes:
receiving, by the autonomous driving domain, region information transmitted by the cockpit domain during cruising of the vehicle based on a pre-defined navigation path,
the pre-defined navigation path indicating at least a first geographical region and a second geographical region;
obtaining, during cruising of the vehicle in the first geographical region, an updated map dataset of the second geographical region when it is determined based on the region information that the vehicle is capable of performing autonomous driving in the second geographical region and that an existing map dataset of the second geographical region stored in the autonomous driving domain is updatable; and
enabling the autonomous driving function of the vehicle based on the updated map dataset of the second geographical region.

An embodiment of this application provides a map data processing method based on a vehicle control system. The vehicle control system includes an autonomous driving domain for controlling autonomous driving of a vehicle and a cockpit domain for controlling interaction in the vehicle. The method includes:
displaying, by the cockpit domain, a navigation path in a map in response to a navigation instruction;
determining at least two geographical regions indicated by the navigation path;
generating at least one piece of region information based on the navigation path, different region information corresponding to different geographical regions, and the region information being configured for determining whether the vehicle is capable of performing autonomous driving in a corresponding geographical region; and
transmitting the generated region information to the autonomous driving domain, so that the autonomous driving domain enables the autonomous driving function of the vehicle in the corresponding geographical region when determining that the vehicle is capable of performing autonomous driving in the corresponding geographical region.

An embodiment of this application provides a map data processing apparatus based on a vehicle control system. The vehicle control system includes an autonomous driving domain for controlling autonomous driving of a vehicle and a cockpit domain for controlling interaction in the vehicle. The apparatus includes:
a receiving module, configured to receive region information transmitted by the cockpit domain during cruising of the vehicle based on a pre-defined navigation path, the pre-defined navigation path indicating at least a first geographical region and a second geographical region;
an obtaining module, configured to obtain, during cruising of the vehicle in the first geographical region, an updated map dataset of the second geographical region when it is determined based on the region information that the vehicle is capable of performing autonomous driving in the second geographical region and that an existing map dataset of the second geographical region stored in the autonomous driving domain is updatable; and
an enabling module, configured to enable the autonomous driving function of the vehicle based on the updated map dataset of the second geographical region.

An embodiment of this application provides a map data processing apparatus based on a vehicle control system. The vehicle control system includes an autonomous driving domain for controlling autonomous driving of a vehicle and a cockpit domain for controlling interaction in the vehicle. The apparatus includes:
a display module, configured to display a navigation path in a map in response to a navigation instruction;
a determining module, configured to determine at least two geographical regions indicated by the navigation path;
a generation module, configured to generate at least one piece of region information based on the navigation path, different region information corresponding to different geographical regions, and the region information being configured for determining whether the vehicle is capable of performing autonomous driving in a corresponding geographical region; and
a transmission module, configured to transmit the generated region information to the autonomous driving domain, so that the autonomous driving domain enables the autonomous driving function of the vehicle in the corresponding geographical region when determining that the vehicle is capable of performing autonomous driving in the corresponding geographical region.

An embodiment of this application provides an electronic device, including:
a memory, configured to store computer-executable instructions or a computer program; and
a processor, configured to implement, when executing the computer-executable instructions or the computer program stored in the memory, the map data processing method provided in the embodiments of this application.

An embodiment of this application provides a computer-readable storage medium, having computer-executable instructions stored therein. The computer-readable instructions are configured for, when executed by a processor, causing the map data processing method provided in the embodiments of this application to be implemented.

An embodiment of this application provides a computer program product. The computer program product includes a computer program or computer-executable instructions. The computer program or the computer-executable instructions are stored in a computer-readable storage medium. A processor of an electronic device reads the computer-executable instructions from the computer-readable storage medium. The processor executes the computer-executable instructions, so that the electronic device performs the map data processing method provided in the embodiments of this application.

The embodiments of this application have the following beneficial effects.

In the process in which the vehicle travels based on the target navigation path, the autonomous driving domain obtains, during cruising of the vehicle in the first geographical region based on the region information transmitted by the cockpit domain, the updated map dataset of the second geographical region when it is determined based on the region information that the vehicle is capable of performing autonomous driving in the second geographical region and the map dataset of the second geographical region stored in the autonomous driving domain is updatable, to update the map dataset of the second geographical region stored in the autonomous driving domain, and enables the autonomous driving function of the vehicle in the second geographical region based on the updated version of the map dataset of the second geographical region. In this way, a version of the map dataset of the second geographical region is updated in advance when the vehicle does not travel into the second geographical region, so that the vehicle can efficiently perform autonomous driving based on the updated map dataset when traveling into the second geographical region. Therefore, a data version of the second geographical region is updated at best time (in advance), and full update of map dataset of all geographical regions each time is avoided. In this way, the map dataset of the geographical regions is updated as required, and the autonomous driving function is accurately controlled and enabled, so that map dataset update efficiency can be effectively improved, improving autonomous driving safety.

### BRIEF DESCRIPTION OF THE DRAWINGS

FIG. 1 is a schematic diagram of an architecture of a map data processing system according to an embodiment of this application.
FIG. 2 is a schematic diagram 1 of a structure of an electronic device for processing map data according to an embodiment of this application.
FIG. 3 is a schematic diagram 2 of a structure of an electronic device for processing map data according to an embodiment of this application.
FIG. 4 is a schematic flowchart 1 of a map data processing method according to an embodiment of this application.
FIG. 5 is a schematic diagram 1 of a principle of a map data processing method according to an embodiment of this application.
FIG. 6 is a schematic flowchart 2 of a map data processing method according to an embodiment of this application.
FIG. 7 is a schematic flowchart 3 of a map data processing method according to an embodiment of this application.
FIG. 8 is a schematic flowchart 4 of a map data processing method according to an embodiment of this application.
FIG. 9 is a schematic diagram 2 of a principle of a map data processing method according to an embodiment of this application.
FIG. 10 is a schematic diagram 3 of a principle of a map data processing method according to an embodiment of this application.
FIG. 11 is a schematic diagram 1 of a navigation interface for a map data processing method according to an embodiment of this application.
FIG. 12 is a schematic diagram 2 of a navigation interface for a map data processing method according to an embodiment of this application.
FIG. 13 is a schematic flowchart 5 of a map data processing method according to an embodiment of this application.
FIG. 14 is a schematic diagram 4 of a principle of a map data processing method according to an embodiment of this application.
FIG. 15 is a schematic diagram 5 of a principle of a map data processing method according to an embodiment of this application.

### DESCRIPTION OF EMBODIMENTS

To make the objectives, technical solutions, and advantages of this application clearer, the following describes this application in further detail with reference to the accompanying drawings. The described embodiments are not to be considered as a limitation on this application. All other embodiments obtained by a person of ordinary skill in the art without creative efforts shall fall within the protection scope of this application.

In the following descriptions, related "some embodiments" describe a subset of all possible embodiments. However, the "some embodiments" may be the same subset or different subsets of all the possible embodiments, and may be combined with each other without conflict.

The term "first/second/third" involved in the following descriptions is merely used to distinguish between similar objects and does not indicate a specific order of the objects. A specific order or sequence indicated by the term "first/second/third" can be changed where permitted, so that the embodiments of this application described herein can be implemented in an order other than that illustrated or described herein.

Unless otherwise defined, meanings of all technical and scientific terms used in this specification are the same as those usually understood by a person skilled in the art to which this application belongs. Terms used herein are merely intended to describe the embodiments of this application, but are not intended to limit this application.

Before the embodiments of this application are further described in detail, descriptions are made on nouns and terms in the embodiments of this application, and the nouns and terms in the embodiments of this application are applicable to the following explanations.
(1) Navigation-assisted autonomous driving function (navigate on autopilot, (NOA)): A destination may be set to guide a vehicle to perform autonomous driving, and the vehicle can complete operations such as lane change, overtaking, and automatic ramp entry and exit under driver's monitoring. Driving behaviors of NOA include cruising, car-following, evading, yielding, single-rule lane-change behavior planning (for example, merging into a fast lane, and planned exit), and a multi-condition decision-making lane change (a lane change during cruising).
(2) Autonomous driving domain: is a set of software and hardware that specially control autonomous driving in a vehicle.
(3) Cockpit domain: is a set of software and hardware such as a central control screen, a dashboard, and an operation button that are specially configured to interact with a user in a cockpit in a vehicle.
(4) In-vehicle Ethernet: is a new local area network technology that relies on a network to connect in-vehicle electronic units. 100 Mbits/s can be realized on a single unshielded twisted pair. In addition, requirements of high reliability, low electromagnetic radiation, low power consumption, low delay, and the like that are required in the automotive industry are met.
(5) Domain: refers to a set of electronic appliance architectures that control a main functional module of an automobile. Each domain is uniformly controlled by one domain controller, and a most typical division manner is to divide all electronic appliance architectures of the entire automobile into five domains: a power domain, a chassis domain, a body domain, a cockpit domain, and an autonomous driving domain.
(6) Geographical region: The geographical region refers to different regions on the surface of the earth that are divided based on particular natural or textual features. The features may be climate, a terrain, vegetation, an animal type, a culture, a language, or the like. For example, the geographical region may be a natural geographical region, a textual geographical region, or the like.
(7) Autonomous driving: Autonomous driving refers to enabling an automobile to completely or partially perform autonomous driving by using advanced technologies such as a sensing technology, an artificial intelligence algorithm, and a control system without human intervention. The autonomous driving technology can implement functions such as autonomous navigation, environmental perception, obstacle avoidance, traffic signal recognition, and path planning of a vehicle on a road, so that the vehicle can implement safe, efficient, and intelligent autonomous driving. Autonomous driving is mainly divided into the following six levels: a level 0 of no automation, at which the vehicle is completely driven by a human; a level 1 of assisted driving, at which the vehicle has some driving assistance functions, but a driver needs to be responsible for operating the vehicle; a level 2 of partial automation, at which the vehicle can implement functions such as acceleration, braking, and steering, but the driver needs to prepare to take over control at any time; a level 3 of conditional automation, at which the vehicle can implement autonomous driving in a specific environment, but the driver is required to take over control when required; a level 4 of high automation, at which the vehicle can implement completely autonomous driving in a particular case without intervention of the driver; and a level 5 of full automation, at which the vehicle can perform completely autonomous driving in all road and environmental conditions, and the driver does not need to be on the vehicle. The development of the autonomous driving technology may greatly improve traffic safety, reduce traffic accidents and congestion problems, and improve driving efficiency and driving experience, and is an important development direction of intelligent transportation and travel manners in the future.

In an implementation process of the embodiments of this application, the applicant finds that the related art has the following problems.

In the related art, when map data is updated, full update is usually performed on the map data based on a preset update frequency. This results in low map data update efficiency and low autonomous driving safety.

Embodiments of this application provide a map data processing method and apparatus, an electronic device, a computer-readable storage medium, and a computer program product, to effectively improve map data update efficiency, improving autonomous driving safety. The following describes an exemplary application of a map data processing system provided in an embodiment of this application.

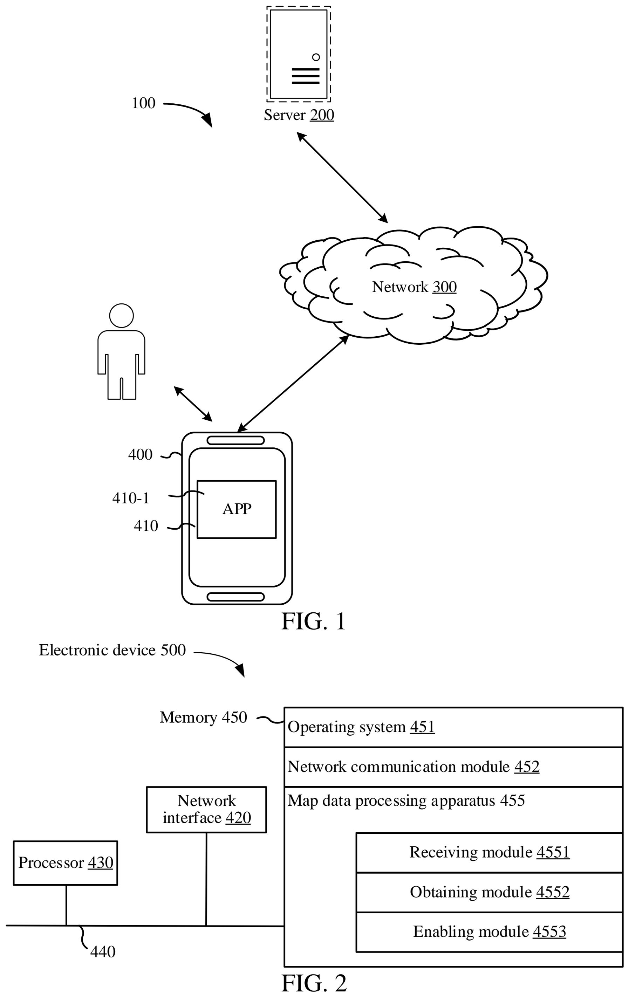

FIG. 1 is a schematic diagram of an architecture of a map data processing system 100 according to an embodiment of this application. A terminal (for example, a terminal 400 is shown) is connected to a server 200 through a network 300. The network 300 may be a wide area network, a local area network, or a combination thereof.

The terminal 400 is configured for a user to use a client 410, and displays a target navigation path in a graphical interface 410-1 (for example, a graphical interface 410-1 is shown). The terminal 400 and the server 200 are connected to each other through a wired or wireless network.

In some or all embodiments, the server 200 may be an independent physical server, a server cluster or distributed system including a plurality of physical servers, or a cloud server providing a basic cloud computing service such as a cloud service, a cloud database, cloud computing, a cloud function, cloud storage, a network service, cloud communication, a middleware service, a domain name service, a security service, a content delivery network (CDN), and a big data and artificial intelligence platform. The terminal 400 may be a smartphone, a tablet computer, a notebook computer, a desktop computer, a smart speaker, a smart television, a smartwatch, an in-vehicle terminal, or the like, but is not limited thereto. The electronic device provided in the embodiments of this application may be implemented as a terminal, or may be implemented as a server. The terminal and the server may be connected directly or indirectly in a wired or wireless communication mode. This is not limited in the embodiments of this application.

In some or all embodiments, a vehicle control system is run in the terminal 400. In a process in which a vehicle travels based on a target navigation path, an autonomous driving domain in the terminal 400 receives region information transmitted by a cockpit domain, obtains an updated map dataset of a second geographical region during cruising of the vehicle in a first geographical region when it is determined based on the region information that the vehicle is capable of performing autonomous driving in the second geographical region and map dataset of the second geographical region stored in the autonomous driving domain is updatable (i.e., the map dataset of the second geographical region needs updating; in other words, as long as the map dataset is not the latest version, the map dataset is updatable), and enables an autonomous driving function of the vehicle in the second geographical region based on the updated map dataset of the second geographical region.

In some other or all embodiments, a vehicle control system is run in the server 200. In a process in which a vehicle travels based on a target navigation path, an autonomous driving domain in the server 200 receives region information transmitted by a cockpit domain, obtains a updated map dataset of a second geographical region during cruising of the vehicle in a first geographical region when it is determined based on the region information that the vehicle is capable of performing autonomous driving in the second geographical region and map dataset of the second geographical region stored in the autonomous driving domain is updatable, and enables an autonomous driving function of the vehicle in the second geographical region based on the updated map dataset of the second geographical region.

In some other or all embodiments, the embodiments of this application may be implemented by using a cloud technology. The cloud technology refers to a hosting technology that unifies a series of resources such as hardware, software, and networks within a wide area network or a local area network, to implement calculation, storage, processing, and sharing of data.

The cloud technology is a generic term of a network technology, an information technology, an integration technology, a management platform technology, an application technology, and the like based on application of a cloud computing business model. The resources may form a resource pool and are used on demand, which is flexible and convenient. A cloud computing technology will become an important support. A backend service of a technology network system requires a lot of computing and storage resources.

FIG. 2 is a schematic diagram of a structure of an electronic device 500 for processing map data according to an embodiment of this application. The electronic device 500 shown in FIG. 2 may be the server 200 or the terminal 400 shown in FIG. 1. The electronic device 500 shown in FIG. 2 includes at least one processor 430, a memory 450, and at least one network interface 420. The components in the electronic device 500 are coupled together through a bus system 440. The bus system 440 is configured to implement connection and communication between the components. In addition to a data bus, the bus system 440 further includes a power bus, a control bus, and a state signal bus. However, for clarity, various buses are marked as the bus system 440 in FIG. 2.

The processor 430 may be an integrated circuit chip having a signal processing capability, for example, a general purpose processor, a digital signal processor (DSP) or another programmable logic device, a discrete gate or transistor logic device, a discrete hardware component, or the like. The general purpose processor may be a microprocessor, any conventional processor, or the like.

The memory 450 may be removable, irremovable, or a combination thereof. For example, a hardware device includes a solid-state memory, a hard disk drive, an optical disk drive, and the like. The memory 450 includes one or more storage devices located physically away from the processor 430.

The memory 450 includes a volatile memory or a non-volatile memory, or may include both a volatile memory and a non-volatile memory. The non-volatile memory may be a read-only memory (ROM), and the volatile memory may be a random access memory (RAM). The memory 450 described in this embodiment of this application is intended to include any suitable type of memory.

In some or all embodiments, the memory 450 can store data to support various operations. Examples of the data include a program, a module, a data structure, or a subset or a superset thereof, which are described below by way of example.

An operating system 451 includes system programs configured for processing various basic system services and performing hardware-related tasks, for example, a framework layer, a core library layer, and a driver layer, and is configured to implement various basic services and process hardware-based tasks.

A network communication module 452 is configured to reach another electronic device through one or more (wired or wireless) network interfaces 420. For example, the network interface 420 includes a Bluetooth interface, a wireless fidelity (Wi-Fi) interface, a universal serial bus (USB) interface, and the like.

In some or all embodiments, the map dataset processing apparatus provided in the embodiments of this application may be implemented in a software manner. FIG. 2 shows a map data processing apparatus 455 stored in the memory 450. The map data processing apparatus 455 may be software in a form of a program, a plug-in, and the like, and includes the following software modules: a receiving module 4551, an obtaining module 4552, and an enabling module 4553. These modules are logical, so that the modules can be freely combined or further split based on implemented functions. The functions of the modules are explained below.

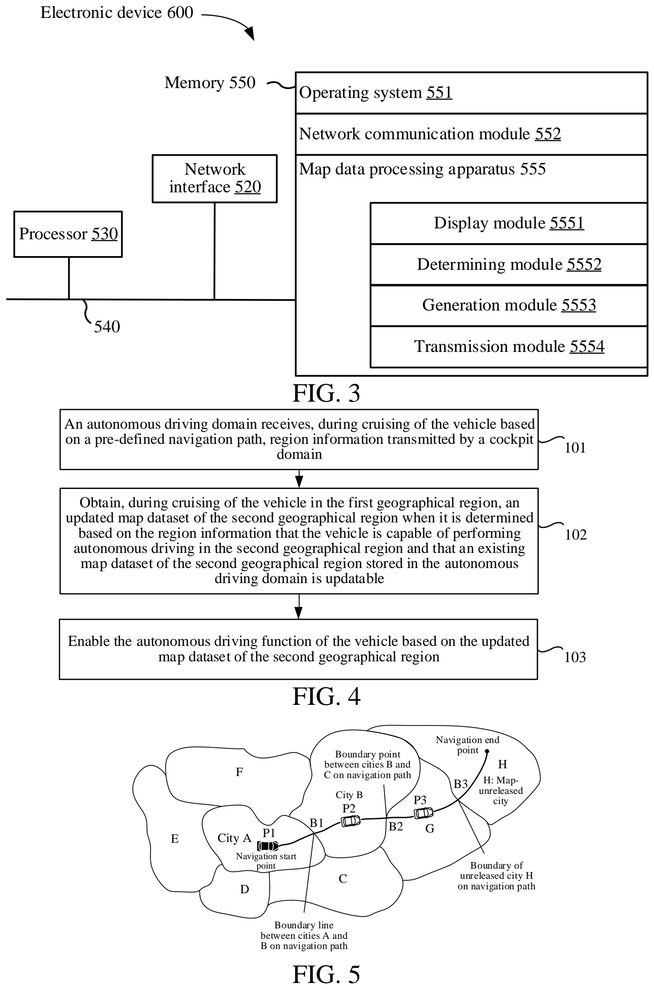

FIG. 3 is a schematic diagram of a structure of an electronic device 600 for processing map data according to an embodiment of this application. The electronic device 600 shown in FIG. 3 may be the server 200 or the terminal 400 shown in FIG. 1. The electronic device 600 shown in FIG. 3 includes at least one processor 530, a memory 550, and at least one network interface 520. The components in the electronic device 600 are coupled together through a bus system 540. The bus system 540 is configured to implement connection and communication between the components. In addition to a data bus, the bus system 540 further includes a power bus, a control bus, and a state signal bus. However, for clarity, various buses are marked as the bus system 540 in FIG. 3.

In some or all embodiments, the memory 550 can store data to support various operations. Examples of the data include a program, a module, a data structure, or a subset or a superset thereof, which are described below by way of example.

An operating system 551 includes system programs configured for processing various basic system services and performing hardware-related tasks, for example, a framework layer, a core library layer, and a driver layer, and is configured to implement various basic services and process hardware-based tasks.

A network communication module 552 is configured to reach other electronic devices via one or more (wired or wireless) network interfaces 520. The network interface 520 exemplarily includes: a Bluetooth interface, a wireless fidelity (Wi-Fi) interface, a universal serial bus (USB) interface, and the like.

In some or all embodiments, the map data processing apparatus provided in the embodiments of this application may be implemented in a software manner. FIG. 3 shows a map data processing apparatus 555 stored in the memory 550. The map data processing apparatus 555 may be software in a form of a program, a plug-in, and the like, and includes the following software modules: a display module 5551, a determining module 5552, a generation module 5553, and a transmission module 5554. These modules are logical and may be freely combined or further split based on implemented functions. The functions of the modules are explained below.

In some other or all embodiments, the map data processing apparatus provided in the embodiments of the application may be implemented in a hardware manner. In an example, the map data processing apparatus provided in the embodiments of the application may be a processor in a form of a hardware decoding processor, programmed to perform the map data processing method provided in the embodiments of the application. For example, the processor in the form of the hardware decoding processor may use one or more application-specific integrated circuits (ASICs), a DSP, a programmable logic device (PLD), a complex programmable logic device (CPLD), a field programmable gate array (FPGA), or another electronic component.

In some or all embodiments, the terminal or the server may implement the map data processing method provided in the embodiments of this application by running a computer program or computer-executable instructions. For example, the computer program may be a native program (for example, a dedicated map data processing program) or a software module in an operating system, for example, a map data processing module that may be embedded in any program (for example, an instant messaging client, an album program, an electronic map client, or a navigation client); or may be a native application (APP), that is, a program that needs to be installed in the operating system for running. In summary, the computer program may be an application, a module, or a plug-in in any form.

The map data processing method provided in the embodiments of this application is described with reference to exemplary applications and implementations of the server or the terminal provided in the embodiments of this application.

FIG. 4 is a schematic flowchart 1 of a map data processing method according to an embodiment of this application. The map data processing method provided in this embodiment of this application is described with reference to operation 101 to operation 104 shown in FIG. 4. The map data processing method provided in this embodiment of this application may be based on a vehicle control system. The vehicle control system includes an autonomous driving domain for controlling autonomous driving of a vehicle and a cockpit domain for controlling interaction in the vehicle. The vehicle control system may be implemented by a server or a terminal alone, or may be cooperatively implemented by a server and a terminal. The following provides descriptions by using an example in which the vehicle control system is implemented by the server alone and the autonomous driving domain in the vehicle control system is an execution body.

In operation 101, the autonomous driving domain receives, during cruising of the vehicle based on a pre-defined navigation path, region information transmitted by the cockpit domain.

In some or all embodiments, the region information is configured for determining whether the vehicle is capable of performing autonomous driving in a second geographical region and whether map dataset of the second geographical region stored in the autonomous driving domain is an updated map dataset. The region information includes a target region identifier of the second geographical region and an updated dataset of the second geographical region. The updated map dataset indicates the map dataset is more up-to-date than the existing map dataset of the second geographical region.

In some or all embodiments, the target navigation path includes at least a first geographical region and the second geographical region. The target navigation path passes through at least two geographical regions. The at least two geographical regions include the first geographical region and the second geographical region that the vehicle needs to pass through in sequence.

In some or all embodiments, different region information corresponds to different geographical regions, and the region information transmitted by the cockpit domain may be region information respectively generated by the cockpit domain for different geographical regions based on a preset frequency in the process in which the vehicle travels based on the target navigation path. In an example, when the vehicle travels along the target navigation path, the controller (e.g., SoC/MCU) of the cockpit domain controller adopts a map fusion algorithm to instantiate one or more upcoming geographical regions into regional information one by one, and broadcast to other domains, such as the autonomous driving domain, at a preset frequency (typically 1 Hz to 10 Hz, with the frequency being inversely proportional to the vehicle speed). The related parameters involved in the above process can be configured and quantified in software.

In some or all embodiments, the region information includes the updated dataset of the second geographical region and the target region identifier of the second geographical region.

In this way, in the process in which the vehicle travels based on the target navigation path, the autonomous driving domain receives the region information transmitted by the cockpit domain, so that the autonomous driving domain subsequently controls, based on the received region information, the vehicle whether to perform autonomous driving in a corresponding geographical region, effectively ensuring autonomous driving safety of the vehicle. In addition, the cockpit domain generates the region information, so that a calculation load of the autonomous driving domain is effectively reduced, and a calculation capability of the autonomous driving domain is effectively improved. Therefore, the autonomous driving domain can focus on calculation related to autonomous driving, more effectively ensuring autonomous driving safety of the vehicle.

In an example, FIG. 5 is a schematic diagram 1 of a principle of the map data processing method according to an embodiment of this application. In the process in which the vehicle travels based on the target navigation path, the cockpit domain transmits region information in a geographical region P1, the cockpit domain transmits region information in a geographical region P2, and the cockpit domain transmits region information in a geographical region P3.

In operation 102, the updated map dataset of the second geographical region is obtained during cruising of the vehicle in the first geographical region when it is determined based on the region information that the vehicle is capable of performing autonomous driving in the second geographical region and the map dataset of the second geographical region stored in the autonomous driving domain is updatable.

In some or all embodiments, the target navigation path includes at least the first geographical region and the second geographical region. To be specific, in the process in which the vehicle travels based on the target navigation path, the vehicle first passes through the first geographical region and then passes through the second geographical region. In this case, the first geographical region cannot be a geographical region in which an end point of the target navigation path is located, and the first geographical region may be a geographical region in which a start point of the target navigation path is located. The second geographical region cannot be the geographical region in which the start point of the target navigation path is located, and the second geographical region may be the geographical region in which the end point of the target navigation path is located.

In an example, refer to FIG. 5. When the first geographical region is a geographical region in which a city A is located, and the second geographical region is a geographical region in which a city B is located, the first geographical region is the geographical region in which the navigation start point of the target navigation path is located. During cruising of the vehicle in the geographical region in which the city A is located, when it is determined based on the region information that the vehicle is capable of performing autonomous driving in the geographical region in which the city B is located, and map dataset that is of the geographical region in which the city B is located and that is stored in the autonomous driving domain is updatable or not a latest version, the updated map dataset of the geographical region in which the city B is located is obtained.

In an example, refer to FIG. 5. When the first geographical region is a geographical region in which a city B is located, and the second geographical region is a geographical region in which a city G is located, if it is determined based on the region information that the vehicle is capable of performing autonomous driving in the geographical region in which the city G is located, and map dataset that is of the geographical region in which the city G is located and that is stored in the autonomous driving domain is not a latest version of map data, the updated map dataset of the geographical region in which the city G is located is obtained.

In this way, the first geographical region and the second geographical region are geographical regions through which the vehicle passes in sequence and that are on the target navigation path, and during cruising of the vehicle in the first geographical region, when it is determined based on the region information that the vehicle is capable of performing autonomous driving in the second geographical region, and the map dataset of the second geographical region stored in the autonomous driving domain is not the latest version of map dataset or updatable, the updated map dataset of the second geographical region is obtained. In this way, a version of the map dataset of the second geographical region is updated in advance when the vehicle does not travel into the second geographical region, so that the vehicle can efficiently perform autonomous driving based on the updated map dataset when traveling into the second geographical region. Therefore, a data version of the second geographical region is updated at best time, and full update of map dataset of all geographical regions each time is effectively avoided. In this way, the map dataset of the geographical regions is updated as required, and an autonomous driving function is accurately controlled to be released and enabled, so that map dataset update efficiency is effectively improved.

In some or all embodiments, before the updated map dataset of the second geographical region is obtained in operation 102, a target autonomous driving condition for the second geographical region may be determined in the following manner: obtaining a mapping relationship between a region identifier of each geographical region and a corresponding autonomous driving condition; and determining the target autonomous driving condition for the second geographical region based on the target region identifier and the mapping relationship.

In some or all embodiments, the target autonomous driving condition is configured for indicating whether the vehicle is capable of performing autonomous driving in the second geographical region.

In some or all embodiments, determining the target autonomous driving condition for the second geographical region based on the target region identifier and the mapping relationship may be implemented in the following manner: querying each mapping relationship for a target mapping relationship including the target region identifier, and determining an autonomous driving condition in the target mapping relationship as the target autonomous driving condition for the second geographical region.

In an example, refer to FIG. 5. The mapping relationship between the region identifier of each geographical region and the corresponding autonomous driving condition in FIG. 5 is shown in the following Table 1.

**Table 1 Schematic table of a mapping relationship between a region identifier of each geographical region and a corresponding autonomous driving condition**

| Geographical region | Region identifier | Autonomous driving condition | Mapping relationship |
|---|---|---|---|
| City A | A | First autonomous driving condition | A-first autonomous driving condition |
| City B | B | First autonomous driving condition | B-first autonomous driving condition |
| City G | G | First autonomous driving condition | G-first autonomous driving condition |
| City H | H | Second autonomous driving condition | H-second autonomous driving condition |

The first autonomous driving condition is configured for indicating that the vehicle is capable of performing autonomous driving in a corresponding geographical region. The second autonomous driving condition is configured for indicating that the vehicle is incapable of performing autonomous driving in a corresponding geographical region.

In this way, the target autonomous driving condition for the second geographical region is queried based on the mapping relationship, so that whether the vehicle is capable of performing autonomous driving in the second geographical region can be quickly determined, laying a data support for subsequent successful autonomous driving of the vehicle in the second geographical region.

In some or all embodiments, the obtaining a mapping relationship between a region identifier of each geographical region and a corresponding autonomous driving condition may be implemented in the following manner: transmitting a mapping relationship obtaining request to the cockpit domain, the mapping relationship obtaining request being configured for triggering the cockpit domain to generate the mapping relationship based on the target navigation path; and receiving the mapping relationship that is transmitted by the cockpit domain and that is between the region identifier of each geographical region and the corresponding autonomous driving condition.

In some or all embodiments, the mapping relationship between the region identifier of each geographical region and the corresponding autonomous driving condition may be generated by the cockpit domain based on the target navigation path. When the autonomous driving domain needs to determine, based on the mapping relationship, whether the vehicle is capable of performing autonomous driving in the second geographical region, the autonomous driving domain may transmit the mapping relationship obtaining request to the cockpit domain, to accurately obtain the mapping relationship between the region identifiers of each geographical region and the corresponding autonomous driving condition.

In this way, the cockpit domain generates the mapping relationship for the autonomous driving domain to use, so that the calculation load of the autonomous driving domain is effectively reduced, and the calculation capability of the autonomous driving domain is effectively improved. Therefore, the autonomous driving domain can focus on calculation related to autonomous driving, more effectively ensuring the autonomous driving safety of the vehicle.

In some or all embodiments, the region information includes the updated dataset of the second geographical region.

In some or all embodiments, before the updated map dataset of the second geographical region is obtained in operation 102, the following processing may be performed: obtaining a data version of the map dataset of the second geographical region stored in the autonomous driving domain, and performing matching on the updated dataset and the data version to obtain a matching result.

In some or all embodiments, the matching result is configured for indicating whether the map dataset of the second geographical region stored in the autonomous driving domain is the updated map dataset.

In some or all embodiments, the performing matching on the updated dataset and the data version to obtain a matching result may be implemented in the following manner: performing matching on the updated dataset and the data version; and determining that the matching result is a first matching result when the updated dataset is the same as the data version, the first matching result being configured for indicating that the map dataset of the second geographical region stored in the autonomous driving domain is the updated map dataset; or determining that the matching result is a second matching result when the updated dataset is different from the data version, the second matching result being configured for indicating that the map dataset of the second geographical region stored in the autonomous driving domain is updatable.

In this way, matching is performed on the updated dataset and the data version to obtain the matching result for indicating whether the map dataset of the second geographical region stored in the autonomous driving domain is the updated map dataset, to subsequently determine, by using the matching result as a criterion, whether to update the map dataset of the second geographical region.

In some or all embodiments, before the updated map dataset of the second geographical region is obtained in operation 102, the following processing may be performed: obtaining a current location of the vehicle in the first geographical region and a geographical boundary line between the first geographical region and the second geographical region; and determining a distance between the current location and the geographical boundary line, and comparing the distance with a distance threshold to obtain a comparison result, the comparison result being configured for indicating whether the distance is less than the distance threshold.

In some or all embodiments, the comparing the distance with a distance threshold to obtain a comparison result may be implemented in the following manner: comparing the distance with the distance threshold; and determining that the comparison result is a first comparison result when the distance is less than the distance threshold, the first comparison result being configured for indicating that the distance is less than the distance threshold; determining that the comparison result is a second comparison result when the distance is greater than the distance threshold, the second comparison result being configured for indicating that the distance is greater than the distance threshold; or determining that the comparison result is a third comparison result when the distance is equal to the distance threshold, the third comparison result being configured for indicating that the distance is equal to the distance threshold.

In some or all embodiments, obtaining the updated map dataset of the second geographical region may be implemented in the following manner: obtaining the updated map dataset of the second geographical region when the comparison result indicates that the distance is less than the distance threshold.

In this way, the map dataset of the second geographical region is updated when the distance is less than the distance threshold, to ensure that the vehicle can perform autonomous driving by using a new version of map dataset when traveling to the second geographical region (when the distance is greater than the distance threshold, a supplier of the map dataset may also perform data update, and when the distance is less than the distance threshold, performing data update can effectively obtain map dataset obtained by performing update when the distance is greater than the distance threshold), effectively improving the autonomous driving safety.

In some or all embodiments, during cruising of the vehicle in the first geographical region, when it is determined based on the region information that the vehicle is capable of performing autonomous driving in the second geographical region, and the map dataset of the second geographical region stored in the autonomous driving domain is the updated map dataset, the current location of the vehicle in the first geographical region and the geographical boundary line between the first geographical region and the second geographical region are obtained. When the distance between the current location and the geographical boundary line is less than the distance threshold, an autonomous driving function of the vehicle corresponding to the second geographical region is enabled based on the map dataset of the second geographical region stored in the autonomous driving domain.

In some or all embodiments, during cruising of the vehicle in the first geographical region, when it is determined based on the region information that the vehicle is capable of performing autonomous driving in the second geographical region, and the map dataset of the second geographical region stored in the autonomous driving domain is the updated map dataset, the map dataset of the second geographical region stored in the autonomous driving domain does not need to be updated. When the distance between the current location and the geographical boundary line is less than the distance threshold, the autonomous driving function of the vehicle in the second geographical region is directly enabled based on the map dataset of the second geographical region stored in the autonomous driving domain.

In some or all embodiments, enabling the autonomous driving function of the vehicle in the second geographical region refers to switching to an autonomous driving mode when the vehicle travels to the second geographical region when it is confirmed that autonomous driving is allowed in the second geographical region, to completely automatically control actions of the vehicle such as acceleration, braking, and steering, thereby implementing autonomous driving. Before the autonomous driving function of the vehicle in the second geographical region is enabled, the autonomous driving function may be completely off or standby.

In an example, refer to FIG. 5. When the first geographical region is the geographical region in which the city A is located, and the second geographical region is the geographical region in which the city B is located, the first geographical region is the geographical region in which the navigation start point of the target navigation path is located. During cruising of the vehicle in the geographical region in which the city A is located, when it is determined based on the region information that the vehicle is capable of performing autonomous driving in the geographical region in which the city B is located, and the map dataset that is of the geographical region in which the city B is located and that is stored in the autonomous driving domain is the updated map dataset, if the distance between the current location and the geographical boundary line is less than the distance threshold, an autonomous driving function of the vehicle corresponding to the geographical region in which the city B is located is directly enabled based on the map dataset that is of the geographical region in which the city B is located and that is stored in the autonomous driving domain.

In an example, refer to FIG. 5. When the first geographical region is the geographical region in which the city B is located, and the second geographical region is the geographical region in which the city G is located, if it is determined based on the region information that the vehicle is capable of performing autonomous driving in the geographical region in which the city G is located, and the map dataset that is of the geographical region in which the city G is located and that is stored in the autonomous driving domain is the updated map dataset, when the distance between the current location and the geographical boundary line is less than the distance threshold, an autonomous driving function of the vehicle corresponding to the geographical region in which the city G is located is directly enabled based on the map dataset that is of the geographical region in which the city G is located and that is stored in the autonomous driving domain.

In this way, when the distance between the current location and the geographical boundary line is less than the distance threshold, the autonomous driving function of the vehicle in the second geographical region is directly enabled based on the map dataset of the second geographical region stored in the autonomous driving domain, so that the autonomous driving function is already enabled before the vehicle travels to the second geographical region, effectively improving real-time performance of autonomous driving of the vehicle in the second geographical region, and effectively avoiding an unnecessary load brought to the autonomous driving domain due to premature enabling of the autonomous driving function. When the vehicle already performs autonomous driving in the first geographical region, reducing the load of the autonomous driving domain effectively improves the calculation capability of the autonomous driving domain, so that the autonomous driving domain can focus on calculation related to autonomous driving in the first geographical region, more effectively ensuring the autonomous driving safety of the vehicle.

In some other or all embodiments, during cruising of the vehicle in the first geographical region, when it is determined based on the region information that the vehicle is capable of performing autonomous driving in the second geographical region, and the map dataset of the second geographical region stored in the autonomous driving domain is the updated map dataset, an autonomous driving function of the vehicle in the second geographical region is enabled based on the map dataset of the second geographical region stored in the autonomous driving domain.

In an example, refer to FIG. 5. When the first geographical region is the geographical region in which the city A is located, and the second geographical region is the geographical region in which the city B is located, the first geographical region is the geographical region in which the navigation start point of the target navigation path is located. During cruising of the vehicle in the geographical region in which the city A is located, when it is determined based on the region information that the vehicle is capable of performing autonomous driving in the geographical region in which the city B is located, and the map dataset that is of the geographical region in which the city B is located and that is stored in the autonomous driving domain is the updated map dataset, an autonomous driving function of the vehicle corresponding to the geographical region in which the city B is located is directly enabled based on the map dataset that is of the geographical region in which the city B is located and that is stored in the autonomous driving domain.

In an example, refer to FIG. 5. When the first geographical region is the geographical region in which the city B is located, and the second geographical region is the geographical region in which the city G is located, if it is determined based on the region information that the vehicle is capable of performing autonomous driving in the geographical region in which the city G is located, and the map dataset that is of the geographical region in which the city G is located and that is stored in the autonomous driving domain is the updated map dataset, an autonomous driving function of the vehicle corresponding to the geographical region in which the city G is located is directly enabled based on the map dataset that is of the geographical region in which the city G is located and that is stored in the autonomous driving domain.

In this way, the autonomous driving function of the vehicle in the second geographical region is directly enabled based on the map dataset of the second geographical region stored in the autonomous driving domain, so that the autonomous driving function is already enabled before the vehicle travels to the second geographical region, effectively improving real-time performance of autonomous driving of the vehicle in the second geographical region. In addition, when the vehicle already performs autonomous driving in the first geographical region, enabling the autonomous driving function of the vehicle in the second geographical region in real time can ensure a quick response of the autonomous driving function when a speed of the vehicle is low, more effectively ensuring autonomous driving safety of the vehicle.

In some or all embodiments, during cruising of the vehicle in the first geographical region, when it is determined based on the region information that the vehicle is incapable of performing autonomous driving in the second geographical region, first prompt information is outputted.

In some or all embodiments, the first prompt information is configured for prompting that the vehicle is incapable of performing autonomous driving in the second geographical region.

In some or all embodiments, outputting the first prompt information when it is determined based on the region information that the vehicle is incapable of performing autonomous driving in the second geographical region may be implemented in the following manner: obtaining the current location of the vehicle in the first geographical region and the geographical boundary line between the first geographical region and the second geographical region during cruising of the vehicle in the first geographical region when it is determined based on the region information that the vehicle is incapable of performing autonomous driving in the second geographical region; and outputting the first prompt information when the distance between the current location and the geographical boundary line is less than the distance threshold.

In this way, during cruising of the vehicle in the first geographical region, when it is determined based on the region information that the vehicle is incapable of performing autonomous driving in the second geographical region, the first prompt information is outputted when the distance between the current location and the geographical boundary line is less than the distance threshold, so that when it is most likely that the autonomous driving function is triggered to be enabled before the vehicle travels to the second geographical region, it is prompted that the vehicle is incapable of performing autonomous driving in the second geographical region, effectively improving a prompt effect of the first prompt information.

In some or all embodiments, the first geographical region is the geographical region in which the start point of the target navigation path is located. During cruising of the vehicle in the first geographical region, when it is determined based on the region information that the vehicle is capable of performing autonomous driving in the first geographical region, and map dataset of the first geographical region stored in the autonomous driving domain is not a latest version of map data, the updated map dataset of the first geographical region is obtained. An autonomous driving function of the vehicle corresponding to the first geographical region is enabled based on the updated map dataset of the first geographical region, so that the vehicle performs autonomous driving in the first geographical region.

In an example, refer to FIG. 5. When the first geographical region is the geographical region in which the city A is located, and the second geographical region is the geographical region in which the city B is located, the first geographical region is the geographical region in which the navigation start point of the target navigation path is located. During cruising of the vehicle in the geographical region in which the city A is located, when it is determined based on the region information that the vehicle is capable of performing autonomous driving in the geographical region in which the city A is located, and map dataset that is of the geographical region in which the city A is located and that is stored in the autonomous driving domain is not a latest version of map data, the updated map dataset of the geographical region in which the city A is located is obtained.

In this way, the first geographical region and the second geographical region are geographical regions through which the vehicle passes in sequence and that is on the navigation path, and during cruising of the vehicle in the first geographical region, when it is determined based on the region information that the vehicle is capable of performing autonomous driving in the first geographical region, and the map dataset of the first geographical region stored in the autonomous driving domain is updatable, the updated map dataset of the first geographical region is obtained. The autonomous driving function of the vehicle corresponding to the first geographical region is enabled based on the updated map dataset of the first geographical region, so that the vehicle performs autonomous driving in the first geographical region. In this way, a version of the map dataset of the second geographical region can be updated in real time when the vehicle does not travel into the second geographical region, so that the vehicle can efficiently perform autonomous driving based on the updated map dataset when traveling into the first geographical region. Therefore, a data version of the first geographical region is updated at best time, and full update of map dataset of all geographical regions each time is effectively avoided. In this way, the map dataset of the geographical regions is updated as required, and the autonomous driving function is accurately controlled to be released and enabled, so that data update efficiency is effectively improved.

In some or all embodiments, the first geographical region is the geographical region in which the start point of the target navigation path is located. During cruising of the vehicle in the first geographical region, when it is determined based on the region information that the vehicle is capable of performing autonomous driving in the first geographical region, the vehicle is currently not in an autonomous driving state, and the map dataset of the first geographical region stored in the autonomous driving domain is the updated map dataset, the autonomous driving function of the vehicle corresponding to the first geographical region is enabled based on the map dataset of the first geographical region stored in the autonomous driving domain, so that the vehicle performs autonomous driving in the first geographical region.

In an example, refer to FIG. 5. When the first geographical region is the geographical region in which the city A is located, and the second geographical region is the geographical region in which the city B is located, the first geographical region is the geographical region in which the navigation start point of the target navigation path is located. During cruising of the vehicle in the geographical region in which the city A is located, when it is determined based on the region information that the vehicle is capable of performing autonomous driving in the geographical region in which the city A is located, and the map dataset that is of the geographical region in which the city A is located and that is stored in the autonomous driving domain is the updated map dataset, an autonomous driving function of the vehicle corresponding to the geographical region in which the city A is located is enabled based on the map dataset that is of the geographical region in which the city A is located and that is stored in the autonomous driving domain, so that the vehicle performs autonomous driving in the geographical region in which the city A is located.

In operation 103, the autonomous driving function of the vehicle is enabled based on the updated map dataset of the second geographical region.

In some or all embodiments, enabling the autonomous driving function of the vehicle refers to enabling an autonomous driving control function of the autonomous driving domain corresponding to the second geographical region to be standby, and enabling an autonomous driving control function for the second geographical region when an autonomous driving instruction is received.

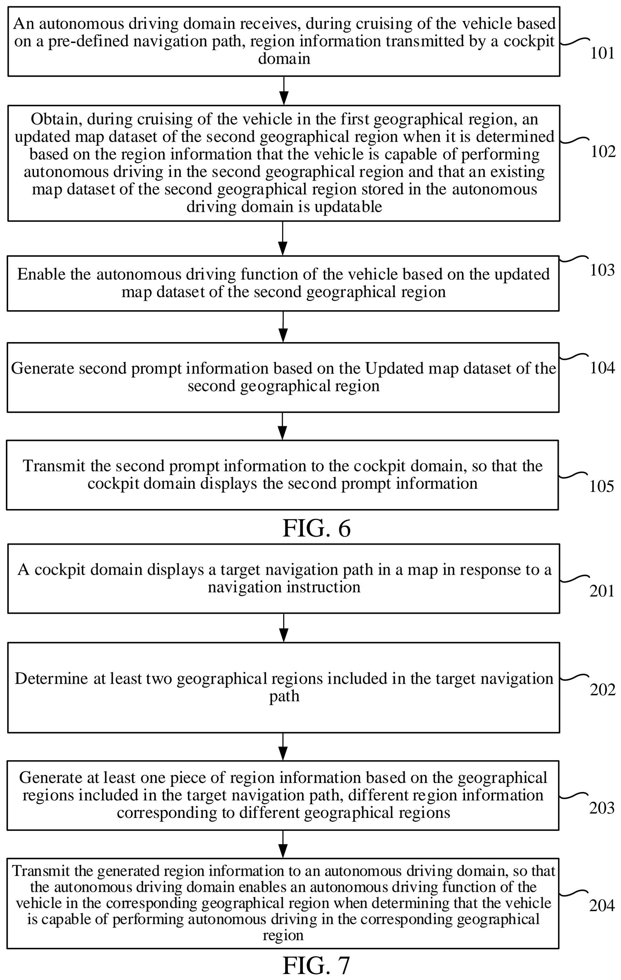

In some or all embodiments, FIG. 6 is a schematic flowchart 2 of a map data processing method according to an embodiment of this application. After operation 103 shown in FIG. 4, operation 104 and operation 105 shown in FIG. 6 may be performed.

In operation 104, second prompt information is generated based on the updated map dataset of the second geographical region.

In some or all embodiments, the second prompt information is configured for prompting the vehicle to enable the autonomous driving function when traveling to the second geographical region.

In operation 105, the second prompt information is transmitted to the cockpit domain, so that the cockpit domain displays the second prompt information.

In some or all embodiments, operation 105 may be implemented in the following manner: transmitting the second prompt information to the cockpit domain, so that the cockpit domain displays the second prompt information when the vehicle travels to the second geographical region.

In some or all embodiments, after the cockpit domain displays the second prompt information, the cockpit domain may generate an autonomous driving enabling instruction in response to a trigger operation on the second prompt information, and transmit the autonomous driving enabling instruction to the autonomous driving domain. The autonomous driving domain receives the autonomous driving enabling instruction, so that the vehicle enables the autonomous driving function when traveling to the second geographical region.

In some or all embodiments, after operation 103, the following processing may be further performed: controlling the vehicle to perform autonomous driving when the vehicle travels to the second geographical region, and outputting third prompt information, the third prompt information being configured for prompting that the vehicle is already in the autonomous driving state.

In some or all embodiments, the outputting third prompt information may be implemented in the following manner: The autonomous driving domain generates the third prompt information, and transmits the third prompt information to the cockpit domain. After receiving the third prompt information, the cockpit domain displays the third prompt information, to prompt a driver of the vehicle that the vehicle is already in the autonomous driving state.

In this way, in the process in which the vehicle travels based on the target navigation path, the autonomous driving domain obtains, during cruising of the vehicle in the first geographical region based on the region information transmitted by the cockpit domain, the updated map dataset of the second geographical region when it is determined based on the region information that the vehicle is capable of performing autonomous driving in the second geographical region and the map dataset of the second geographical region stored in the autonomous driving domain is updatable, to update the map dataset of the second geographical region stored in the autonomous driving domain, and enables the autonomous driving function of the vehicle in the second geographical region based on the updated version of the map dataset of the second geographical region. In this way, the version of the map dataset of the second geographical region is updated in advance when the vehicle does not travel into the second geographical region, so that the vehicle can efficiently perform autonomous driving based on the updated map dataset when traveling into the second geographical region. Therefore, the data version of the second geographical region is updated at best time, and full update of the map dataset of all the geographical regions each time is effectively avoided. In this way, the map dataset of the geographical regions is updated as required, and the autonomous driving function is accurately controlled to be released and enabled, so that the map dataset update efficiency can be effectively improved, improving the autonomous driving safety.

FIG. 7 is a schematic flowchart 3 of a map data processing method according to an embodiment of this application. The map data processing method provided in this embodiment of this application is described with reference to operation 201 to operation 204 shown in FIG. 7. The map data processing method provided in this embodiment of this application may be based on a vehicle control system. The vehicle control system includes an autonomous driving domain for controlling autonomous driving of a vehicle and a cockpit domain for controlling interaction in the vehicle. The vehicle control system may be implemented by a server or a terminal alone, or may be cooperatively implemented by a server and a terminal. The following provides descriptions by using an example in which the vehicle control system is implemented by the server alone and the cockpit domain in the vehicle control system is an execution body.

In operation 201, The cockpit domain displays a target navigation path in a map in response to a navigation instruction.

In an example, refer to FIG. 5. The cockpit domain displays the target navigation path from a navigation start point to a navigation end point in the map in response to the navigation instruction.

In some or all embodiments, in some or all embodiments, the target navigation path includes at least a first geographical region and a second geographical region.

In some or all embodiments, operation 201 may be implemented in the following manner: The cockpit domain obtains a current location of the vehicle in response to the navigation instruction, performs location parsing by using the current location of the vehicle as a navigation start point, to obtain a navigation end point carried in the navigation instruction, and performs navigation path planning based on the navigation start point and the navigation end point, to obtain the target navigation path.

In operation 202, at least two geographical regions included in the target navigation path are determined.

In some or all embodiments, operation 202 may be implemented in the following manner: performing the following processing for each candidate geographical region: comparing the target navigation path with the candidate geographical region to obtain a comparison result, the comparison result being configured for indicating whether the target navigation path includes the candidate geographical region; and determining candidate geographical regions whose comparison results indicate that the target navigation path include the candidate geographical regions as the at least two geographical regions included in the target navigation path.

In operation 203, at least one piece of region information is generated based on the geographical regions included in the target navigation path, different region information corresponding to different geographical regions.

In some or all embodiments, different region information corresponds to different geographical regions, different geographical locations in a same geographical region correspond to same region information, and geographical locations in different geographical regions correspond to different region information.

In some or all embodiments, the region information is configured for determining whether the vehicle is capable of performing autonomous driving in a corresponding geographical region. The region information includes a target region identifier of the second geographical region and an updated dataset of the second geographical region.

In some or all embodiments, the region information is configured for determining whether the vehicle is capable of performing autonomous driving in the second geographical region and whether map dataset of the second geographical region stored in the autonomous driving domain is an updated map dataset. The region information includes the updated dataset of the second geographical region.

In some or all embodiments, generating the at least one piece of region information based on the geographical regions included in the target navigation path may be implemented in the following manner: performing the following processing for each geographical region included in the target navigation path: determining the geographical region as the first geographical region when the geographical region is not a geographical region in which the path end point of the target navigation path is located, and determining a next geographical region of the first geographical region through which the vehicle passes and that is on the target navigation path as the second geographical region; and determining the target region identifier of the second geographical region and the updated dataset of the second geographical region as region information corresponding to the second geographical region.

In operation 204, the generated region information is transmitted to the autonomous driving domain, so that the autonomous driving domain enables an autonomous driving function of the vehicle in the corresponding geographical region when determining that the vehicle is capable of performing autonomous driving in the corresponding geographical region.

In some or all embodiments, identifier configuration is performed on each geographical region through which the target navigation path passes, in response to a mapping relationship obtaining request transmitted by the autonomous driving domain, to obtain a region identifier corresponding to each geographical region. An autonomous driving condition for each geographical region through which the target navigation path passes is determined, the autonomous driving condition being configured for indicating whether the vehicle is capable of performing autonomous driving in a corresponding geographical region. For each geographical region through which the target navigation path passes, a corresponding region identifier and the corresponding autonomous driving condition are constructed as an index entry corresponding to the geographical region. The index entries are summarized to obtain an identifier-autonomous driving condition mapping relationship for determining whether the vehicle is capable of performing autonomous driving in each geographical region. The identifier-autonomous driving condition mapping relationship is transmitted to the autonomous driving domain.

In some or all embodiments, determining the autonomous driving condition for each geographical region through which the target navigation path passes may be implemented by performing the following processing for each geographical region through which the target navigation path passes: determining that the autonomous driving condition is a first autonomous driving condition when a navigation sub-path that is on the target navigation path and that coincides with the geographical region is an autonomous driving path; or determining that the autonomous driving condition is a second autonomous driving condition when a navigation sub-path that is on the target navigation path and that coincides with the geographical region is a non-autonomous driving path.

In some or all embodiments, an autonomous driving path in the geographical region may be determined in the following manner: performing the following processing for each navigation path in the geographical region: obtaining evaluation data of the navigation path in a plurality of evaluation dimensions, and comparing, for each evaluation dimension, evaluation data in the evaluation dimension with an evaluation indicator to obtain an indicator comparison result for the navigation path in each evaluation dimension; and determining the navigation path as an autonomous driving path when each indicator comparison result indicates that the evaluation data satisfies the evaluation indicator.

In some or all embodiments, the evaluation dimension may include but is not limited to a road type of the navigation path, a traffic sign, a speed limitation requirement, a road condition, a construction condition, and the like.

In an example, when the evaluation dimension is the road type of the navigation path, evaluation data of a navigation path A may be that the navigation path A is a highway, and the evaluation indicator may be that the navigation path is required to be a highway and a city highway. In this case, an indicator comparison result for the navigation path A indicates that the evaluation data satisfies the evaluation indicator.

In an example, when the evaluation dimension is the speed limitation requirement, evaluation data of a navigation path A may be a road on which a speed is limited to 50 kilometers per hour, and the evaluation indicator may be that the navigation path is required to be a road on which a speed is limited to be greater than 100 kilometers per hour. In this case, an indicator comparison result for the navigation path A indicates that the evaluation data does not satisfy the evaluation indicator.

In some or all embodiments, the first autonomous driving condition is configured for indicating that the vehicle is capable of performing autonomous driving in the geographical region, and the second autonomous driving condition is configured for indicating that the vehicle is incapable of performing autonomous driving in the geographical region.

In this way, in a process in which the vehicle travels based on the target navigation path, the autonomous driving domain obtains, during cruising of the vehicle in the first geographical region based on the region information transmitted by the cockpit domain, the updated map dataset of the second geographical region when it is determined based on the region information that the vehicle is capable of performing autonomous driving in the second geographical region and the map dataset of the second geographical region stored in the autonomous driving domain is updatable, to update the map dataset of the second geographical region stored in the autonomous driving domain, and enables the autonomous driving function of the vehicle in the second geographical region based on the updated version of the map dataset of the second geographical region. In this way, the version of the map dataset of the second geographical region is updated in advance when the vehicle does not travel into the second geographical region, so that the vehicle can efficiently perform autonomous driving based on the updated map dataset when traveling into the second geographical region. Therefore, the data version of the second geographical region is updated at best time, and full update of the map dataset of all the geographical regions each time is effectively avoided. In this way, the map dataset of the geographical regions is updated as required, and the autonomous driving function is accurately controlled to be released and enabled, so that the map dataset update efficiency can be effectively improved, improving the autonomous driving safety.

The following describes an exemplary application of the embodiments of this application in an actual application scenario of map navigation.

Because an autonomous driving function is not so mature, and high-precision map dataset currently covers expressways and urban fast roads, a vehicle factory needs to have a capability of providing dynamic operation of an autonomous driving function. To resolve this problem, a decision is comprehensively made on a plurality of dimensions such as domain control (an autonomous driving domain and a cockpit domain), a terminal (an on board unit end and an autonomous driving side), a city, and a road level, to finally control the autonomous driving function to be released and enabled by using the high-precision map data. Because the high-precision map dataset is a necessary condition for the autonomous driving function, the autonomous driving function cannot be enabled without the high-precision map data.

In some or all embodiments, refer to FIG. 5. A vehicle travels from a city A in which a navigation start point P1 is located to a navigation end point city through four cities A, B, G, and H. B1 is a boundary between the city A and the city B. B2 is a boundary between the city B and the city G. B3 is a boundary between the city G and the city H. A city D, a city C, a city E, and a city F are cities through which a navigation path does not pass. B1 is a city boundary line between the city A and the city B on the navigation path. B3 is a boundary line of an unreleased city H on the navigation path. The city H is a function-unreleased city, and a boundary between the city H and the city G is B3. When the vehicle travels to the city G, a map outputs a number of the city G in which the vehicle is currently located and a number of the next city H on the navigation path, and starts to output a distance from B3 when the distance from B3 is less than or equal to 3 km. With reference to an output of the map and a city list, a map post-processing program outputs the regional release boundary B3 when the distance from B3 is less than or equal to 300 m. In a map OTA upgrade solution, upgrading is performed in order of close to distant cities on the navigation path. When a map of a city on the navigation path is the updated but OTA upgrade has not been completed on map dataset of a next city on the navigation path, a boundary between the two cities becomes a dynamic fence boundary.

To obtain the dynamic fence boundary, in addition to outputting a number of a city in which the vehicle is currently located, a number of a next city on the navigation path, and a distance from a boundary between the two cities, a map status of the corresponding city (the next city) also needs to be outputted. A map output interface needs to include four pieces of information: the number of the current city: A; a number of a first city ahead on the navigation path: B; a distance from an intersection boundary between the city B ahead and A; and a map version status of the city B: a new version/original version. A map post-processing module determines, based on these outputs, whether there is a defined dynamic fence boundary ahead, and outputs an HD version expired region boundary when a condition is satisfied.

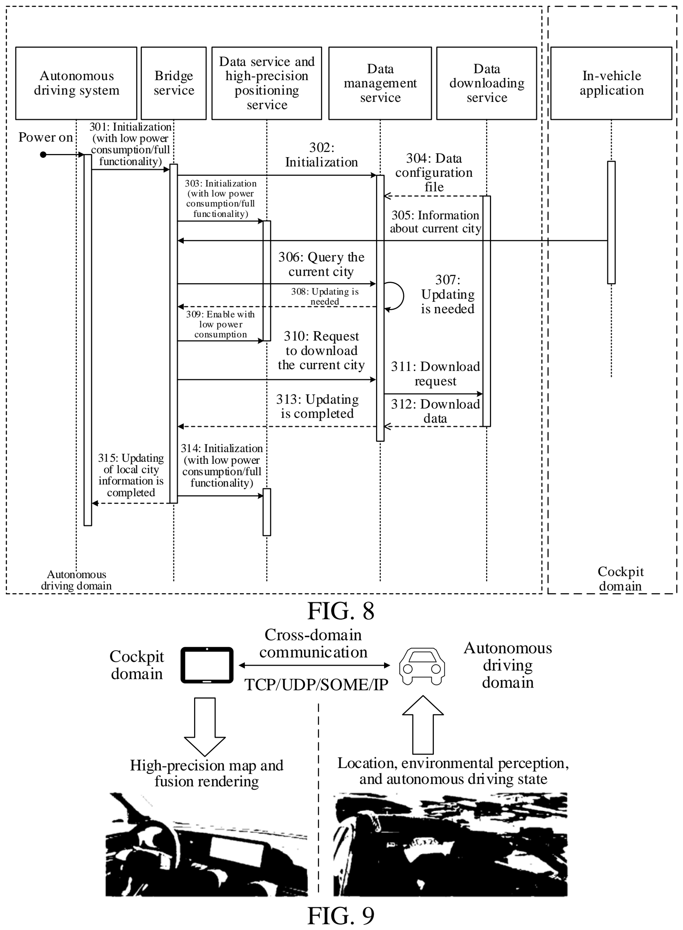

In some or all embodiments, FIG. 8 is a schematic flowchart 4 of a map data processing method according to an embodiment of this application. The map data processing method provided in this embodiment of this application may be applied to a vehicle control system. The vehicle control system includes an autonomous driving domain and a cockpit domain. The autonomous driving domain includes an autonomous driving system, a bridge service, a data service, a high-precision positioning service, a data management service, and a data downloading service. The map data processing method provided in this embodiment of this application may be implemented through interaction between the autonomous driving domain and the cockpit domain, that is, may be implemented by using operation 301 to operation 315 shown in FIG. 8.

In operation 301, the autonomous driving system is initialized (with low power consumption/full functionality).

In some or all embodiments, initialization of the autonomous driving system refers to a series of setting and checking processes performed by the system when the autonomous driving system is started or when the autonomous driving system is restarted after being shut down, to ensure that parts of the system work normally and are in an optimal state. An initialization process usually includes the following operations: hardware checking: the system checks whether all sensors (such as a radar, a LiDAR, and a camera), executors (such as a brake, an accelerator, and steering), and other hardware components are normally connected and can respond; software loading: software of the autonomous driving system may be loaded to a control unit, and this may include firmware update or system optimization; sensor calibration: the autonomous driving system calibrates the sensors by using a built-in self-detection program, to ensure accuracy of readings of the sensors; map and database update: the system checks and updates a high-precision map, a traffic sign, a road rule, and other related information; and system configuration: the autonomous driving system performs configuration based on preference settings of a vehicle and a driver, including setting of an operational design domain (ODD), and various functions and intervention thresholds of the system. Low-power-consumption initialization usually means that when the vehicle is started, the system is started in an energy-saving mode, and only performs necessary checking and configuration, to reduce consumption of a vehicle battery. In this mode, the system may limit operations of some non-key functions until full functionality initialization is completed. Full functionality initialization means that the system completes all necessary checking and configuration, including all sensor calibration and software loading, so that the autonomous driving system is completely ready to be put into operation. After full functionality initialization is completed, the system may run in a full authority and full functionality state, to provide an autonomous driving service for the driver. Initialization of the autonomous driving system is a key operation for ensuring safety and reliability of the system, and is also a basis for the system to correctly understand and respond to an ambient environment.

In operation 302, the bridge service initializes the data management service.

In some or all embodiments, the bridge service transmits an initialization instruction to the data management service, so that the data management service is initialized.

In operation 303, the bridge service initializes the data service and the high-precision positioning service (with low power consumption/full functionality).

In some or all embodiments, the bridge service transmits an initialization instruction to the data service and the high-precision positioning service, so that the data service and the high-precision positioning service are initialized.

In operation 304, the data downloading service delivers a data configuration file to the data management service.

In some or all embodiments, the data downloading service delivers the data configuration file to the data management service, so that the data management service performs data configuration based on the data configuration file.

In operation 305, the bridge service obtains information about a current city from an in-vehicle application in the cockpit domain.

In some or all embodiments, the bridge service transmits a city information obtaining request to the in-vehicle application in the cockpit domain, and receives the information about the current city transmitted by the in-vehicle application in the cockpit domain.

In operation 306, the bridge service queries the current city from the data management service.

In some or all embodiments, the bridge service transmits a city query request to the data management service, and receives the current city transmitted by the data management service.

In operation 307, the data management service determines whether updating is needed.

In some or all embodiments, the data management service determines, based on a current version and an updated version, whether updating is needed. If the current version is not the latest version, updating is needed; or if the current version is the updated version, updating is not needed.

In operation 308, the data management service notifies the bridge service that updating is needed.

In some or all embodiments, data management service transmits an update notification to the bridge service if determining that updating is needed.

In operation 309, the bridge service enables the data service and the high-precision positioning service with low power consumption.

In some or all embodiments, the bridge service transmits a low-power-consumption start instruction to the data service and the high-precision positioning service, so that the data service and the high-precision positioning service are started with low power consumption.

In operation 310, the bridge service requests the data management service to download the current city.

In some or all embodiments, the bridge service transmits a city downloading request to the data management service, so that the data management service feeds back the current city to the bridge service.

In operation 311, the data management service transmits a download request to the data downloading service.

In some or all embodiments, the data management service transmits the download request to the data downloading service, so that the data downloading service responds to the download request.

In operation 312, the data management service downloads data from the data downloading service.

In some or all embodiments, the data management service transmits the download request to the data downloading service, so that the data downloading service transmits the data requested to be downloaded to the data management service in response to the download request.

In operation 313, the data management service notifies the bridge service that downloading is completed.

In some or all embodiments, after the data management service receives the data requested to be downloaded, the data management service transmits a download complete notification to the bridge service.

In operation 314, the bridge service initializes the data service and the high-precision positioning service (with low power consumption/full functionality).

In some or all embodiments, the bridge service transmits an initialization instruction to the data service and the high-precision positioning service, so that the data service and the high-precision positioning service are initialized.

In operation 315, the bridge service notifies the autonomous driving system that updating of local city information is completed.

In some or all embodiments, a working procedure of the autonomous driving domain may be: After the vehicle is powered on, the autonomous driving system indicates an adaptation layer to enter a low-power-consumption or full-functionality state. In the low-power-consumption state, the autonomous driving system does not perform any processing. In the full-functionality state, the autonomous driving system starts to check a current data status, where a checking manner is that the data management service obtains an updated data configuration file from the data downloading service, and then determines, through comparison, whether a local configuration is consistent with a cloud configuration. If the data configurations are consistent, the autonomous driving function continues to be run; or if the data configurations are inconsistent, a city whose data needs to be updated is recorded, and high-precision map dataset is updated from the data downloading service when the autonomous driving function is enabled or is about to be enabled. Core services, that is, the data service and the high-precision positioning service, are started in a low-power-consumption or full-functionality mode. The cockpit domain transmits the information about the current city and information about a next city to the bridge service of the autonomous driving domain through cross-domain communication. The bridge service indicates the data management service to check whether data needs to be updated, and if data of the current city or data of the next city needs to be updated, indicates the data management service to transmit a data request to the data downloading service. After receiving the request, the data downloading service delivers the data of the corresponding city. After the data is updated, if the cockpit ODD, the autonomous driving ODD, a navigation state, a speed, and the like meet autonomous driving requirements, an autonomous driving function ready state is entered, to ask the driver whether the autonomous driving function needs to be enabled.

In some or all embodiments, FIG. 9 is a schematic diagram 2 of a principle of the map data processing method according to an embodiment of this application. The cockpit domain and the autonomous driving domain are two relatively independent processing systems, and cross-domain data transmission is performed between the two systems based on in-vehicle Ethernet by using data transmission protocols such as TCP, UDP, and SOME/IP. Environmental perception information is generated by an RTK positioning device, a visual perception device, and a radar perception device on the autonomous driving system. FIG. 9 shows a cockpit domain of a testing vehicle on which a positioning device and a perception device are mounted. After collecting data of all sensors, the autonomous driving domain packages the data, and transmits the data to the cockpit domain in a cross-domain communication mode. After receiving the data, the cockpit domain performs a series of operations such as retrieval, route planning, and navigation. After navigation is started, the navigation path is transmitted to the autonomous driving domain through cross-domain communication. In a navigation process, the information about the city in which the vehicle is currently located and information about a city on a route are transmitted to the autonomous driving domain through cross-domain communication. In the navigation process, information about a change of a navigation state (for example, data update of the route, yawing, or route switching) is transmitted to the autonomous driving domain through cross-domain communication. The autonomous driving domain performs comprehensive calculation based on navigation information of the cockpit domain and a status of the autonomous driving domain, to control enabling and release of the autonomous driving function.

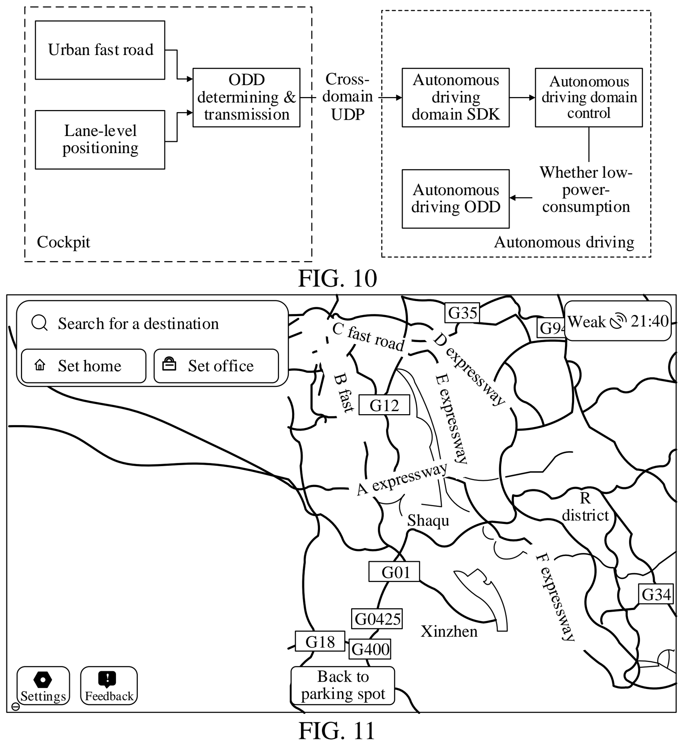

In some or all embodiments, FIG. 10 is a schematic diagram 3 of a principle of the map data processing method according to an embodiment of this application. A cockpit ODD function is to detect whether a location of an ego vehicle is on an expressway or an urban fast road and transmit a status to the autonomous driving domain through cross-domain communication. If the ego vehicle is located on the expressway or the urban fast road, the autonomous driving domain is notified that the ego vehicle is currently located in a region in which the autonomous driving function can be enabled. After the autonomous driving domain receives a positive feedback of a cockpit ODD signal, the autonomous driving domain enables autonomous driving ODD detection and autonomous driving related functions. The cockpit domain transmits the ODD signal to the cockpit ODD signal for a purpose of reducing a running load of the autonomous driving domain. FIG. 10 shows a procedure in which the cockpit domain transmits a cockpit ODD result to the autonomous driving domain. The cockpit domain obtains, through positioning, whether the current location is on the urban fast road or the expressway and that a lane-level positioning condition is satisfied. If cockpit ODD determining satisfies both the road type and the positioning precision, the cockpit domain transmits a state of being within an ODD range to the autonomous driving domain; or if cockpit ODD determining does not satisfy both the road type and the positioning precision, the cockpit transmits, to the autonomous driving, that an autonomous driving condition is currently not satisfied. The autonomous driving domain exits the low-power-consumption state after receiving the state of being within the ODD range from the cockpit, and enables autonomous driving ODD detection; and enters a ready state when the vehicle is within an autonomous driving ODD range, and asks the driver whether to enter autonomous driving.

In some or all embodiments, FIG. 11 is a schematic diagram 1 of a navigation interface for the map data processing method according to an embodiment of this application. Shaqu and Xinzhen are bordered by a city boundary line. A storage form of a city boundary in map dataset is a group of geographical region points (longitudes and latitudes). In this embodiment of this application, not all city boundary points need to be used to calculate a city boundary distance. Routes from Xinzhen to different destinations are different. Different routes may first pass through Shaqu and R district. Herein, attention needs to be paid only to adjacent bordering boundary points on the routes.

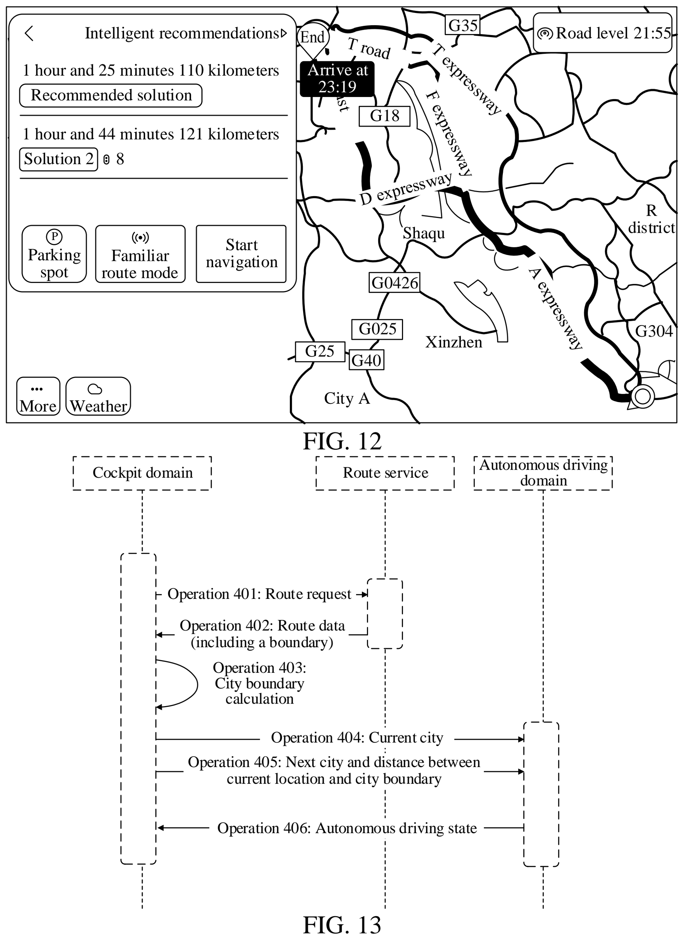

In some or all embodiments, FIG. 12 is a schematic diagram 2 of a navigation interface for the map data processing method according to an embodiment of this application. FIG. 12 shows a planning result of a route from the current location of the vehicle to the end point. The route starts from the current location, passes through Shaqu, and finally reaches the end point. There are two city boundary points on the route: one is a boundary point between Shaqu and Xinzhen, and the other is a boundary point between Shaqu and the city in which the end point is located. This is a relatively simple "one-way" route that passes through each city only once.

In some or all embodiments, FIG. 13 is a schematic flowchart 5 of a map data processing method according to an embodiment of this application. In the map data processing method provided in this embodiment of this application, an autonomous driving state may be enabled by using operation 401 to operation 406 shown in FIG. 13.

In operation 401, a cockpit domain transmits a route request to a route service.

In some or all embodiments, the cockpit domain transmits the route request to the route service, so that the route service returns a route to the cockpit domain.

In operation 402, the route service transmits route data (including a boundary) to the cockpit domain.

In some or all embodiments, the route service transmits the route data (including the boundary) to the cockpit domain in response to the route request transmitted by the cockpit domain.

In operation 403, the cockpit domain performs city boundary calculation.

In some or all embodiments, the cockpit domain performs city boundary calculation on the cockpit domain based on the route data (including the boundary).

In operation 404, the cockpit domain transmits a current city to an autonomous driving domain.

In some or all embodiments, the cockpit domain transmits a city in which a vehicle is currently located to the autonomous driving domain.

In operation 405, the cockpit domain transmits a next city and a distance between the current location and a city boundary to the autonomous driving domain.

In some or all embodiments, the cockpit domain transmits the next city of the current city on the route and the distance between the current location and the city boundary to the autonomous driving domain.

In operation 406, the autonomous driving domain transmits an autonomous driving state to the cockpit domain.

In some or all embodiments, the cockpit domain initiates a route calculation request to a cloud route service, and the route service delivers the route data (including city boundary information). The cockpit domain parses and processes the route data (calculates information about the city in which the current location is located, information about the next city, and a distance between the current location and a nearest city boundary point), and transmits city boundary information to the autonomous driving domain. The autonomous driving domain returns a status of an autonomous driving system to the cockpit domain.

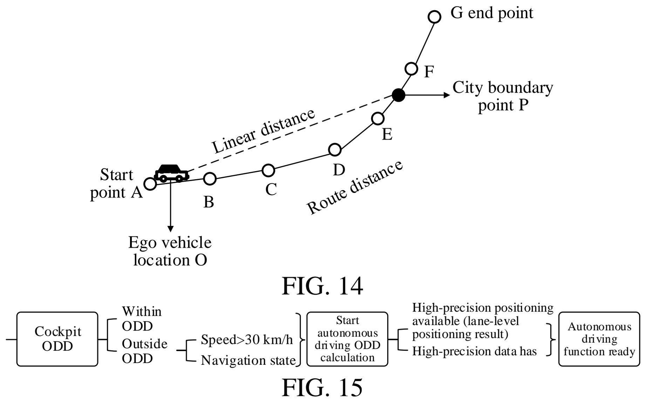

In some or all embodiments, FIG. 14 is a schematic diagram 4 of a principle of the map data processing method according to an embodiment of this application. In this embodiment of this application, a distance between two points on the route is calculated, and an accumulated distance of all points on the route is calculated based on the two points. FIG. 14 shows a point string ABCDEFG forming the route. It is assumed that the location of the ego vehicle is O and the city boundary point is P. There are two manners of calculating a distance between the ego vehicle and the city boundary point. The first is calculating a linear distance based on latitudes and longitudes of the two points: O and P. The second is calculating a length of a connection line of OBCDEFP along the route. In consideration of strong strength and rapid development of China's infrastructure, and especially in consideration of a construction situation of curved roads in mountainous regions, the distance between the ego vehicle and the city boundary point is calculated herein in the second manner.

In some or all embodiments, FIG. 15 is a schematic diagram 5 of a principle of the map data processing method according to an embodiment of this application. After cockpit ODD calculation, a result is transmitted to the autonomous driving domain through cross-domain communication. (1) If the cockpit domain is within an ODD range, autonomous driving ODD calculation is started; if the cockpit is outside an ODD range, and the speed is greater than 30 km/h, autonomous ODD calculation is started; or if the cockpit is outside an ODD range, and the cockpit is in a navigation state, autonomous driving ODD calculation is started. Autonomous driving ODD calculation is based on a lane-level positioning result and a high-precision data status of the autonomous driving domain.

Relevant data such as map dataset is involved in the embodiments of this application. When the embodiments of this application are applied to a specific product or technology, a license or consent of a user is required to be obtained, and collection, use, and processing of the related data are required to comply with related laws and regulations and standards of related countries and regions.

The following continues to describe an exemplary structure in which the map data processing apparatus 455 provided in embodiments of this application is implemented as a software module. In some or all embodiments, as shown in FIG. 2, the software module in the map data processing apparatus 455 stored in the memory 450 may include: the receiving module, configured to receive, by an autonomous driving domain in a process in which a vehicle travels based on a target navigation path, region information transmitted by a cockpit domain, the target navigation path including at least a first geographical region and a second geographical region; the obtaining module, configured to obtain an updated map dataset of the second geographical region during cruising of the vehicle in the first geographical region when it is determined based on the region information that the vehicle is capable of performing autonomous driving in the second geographical region and map dataset of the second geographical region stored in the autonomous driving domain is updatable; and the enabling module, configured to enable an autonomous driving function of the vehicle based on the updated map dataset of the second geographical region.

An embodiment of this application provides a map data processing apparatus based on a vehicle control system. The vehicle control system includes an autonomous driving domain for controlling autonomous driving of a vehicle and a cockpit domain for controlling interaction in the vehicle. The apparatus includes: a display module, configured to display, by the cockpit domain, a target navigation path in a map in response to a navigation instruction; a determining module, configured to determine at least two geographical regions through which the target navigation path passes; a generation module, configured to generate at least one piece of region information based on the target navigation path, different region information corresponding to different geographical regions, and the region information being configured for determining whether the vehicle is capable of performing autonomous driving in a corresponding geographical region; and a transmission module, configured to transmit the generated region information to the autonomous driving domain, so that the autonomous driving domain enables an autonomous driving function of the vehicle in the corresponding geographical region when determining that the vehicle is capable of performing autonomous driving in the corresponding geographical region.

In some or all embodiments, the map data processing apparatus further includes a condition determining module, obtaining a mapping relationship between a region identifier of each geographical region and a corresponding autonomous driving condition, the autonomous driving condition being configured for indicating whether the vehicle is capable of performing autonomous driving in the corresponding geographical region; and determining a target autonomous driving condition for the second geographical region based on the target region identifier and the mapping relationship, the target autonomous driving condition being configured for indicating whether the vehicle is capable of performing autonomous driving in the second geographical region.

In some or all embodiments, the map data processing apparatus further includes a mapping relationship determining module, configured to: transmit a mapping relationship obtaining request to the cockpit domain, the mapping relationship obtaining request being configured for triggering the cockpit domain to generate the mapping relationship based on the target navigation path; and receive the mapping relationship that is transmitted by the cockpit domain and that is between the region identifier of each geographical region and the corresponding autonomous driving condition.

In some or all embodiments, the region information includes the updated dataset of the second geographical region. The map data processing apparatus further includes a matching module, configured to: obtain a data version of the map dataset of the second geographical region stored in the autonomous driving domain, and perform matching on the updated dataset and the data version to obtain a matching result, the matching result being configured for indicating whether the map dataset of the second geographical region stored in the autonomous driving domain is the updated map dataset.

In some or all embodiments, the map data processing apparatus further includes a comparison module, configured to: obtain a current location of the vehicle in the first geographical region and a geographical boundary line between the first geographical region and the second geographical region; and determine a distance between the current location and the geographical boundary line, and compare the distance with a distance threshold to obtain a comparison result, the comparison result being configured for indicating whether the distance is less than the distance threshold. The obtaining module is further configured to obtain the updated map dataset of the second geographical region when the comparison result indicates that the distance is less than the distance threshold.

In some or all embodiments, the obtaining module is further configured to: obtain the current location of the vehicle in the first geographical region and the geographical boundary line between the first geographical region and the second geographical region during cruising of the vehicle in the first geographical region when it is determined based on the region information that the vehicle is capable of performing autonomous driving in the second geographical region and the map dataset of the second geographical region stored in the autonomous driving domain is the updated map dataset; and enable, based on the map dataset of the second geographical region stored in the autonomous driving domain when the distance between the current location and the geographical boundary line is less than the distance threshold, an autonomous driving function of the vehicle corresponding to the second geographical region.

In some or all embodiments, the obtaining module is further configured to output first prompt information during cruising of the vehicle in the first geographical region when it is determined based on the region information that the vehicle is incapable of performing autonomous driving in the second geographical region, the first prompt information being configured for prompting that the vehicle is incapable of performing autonomous driving in the second geographical region.

In some or all embodiments, the obtaining module is further configured to: obtain an updated map dataset of the first geographical region during cruising of the vehicle in the first geographical region when it is determined based on the region information that the vehicle is capable of performing autonomous driving in the first geographical region and map dataset of the first geographical region stored in the autonomous driving domain is updatable; and enable, based on the updated map dataset of the first geographical region, an autonomous driving function of the vehicle corresponding to the first geographical region, so that the vehicle performs autonomous driving in the first geographical region.

In some or all embodiments, the obtaining module is further configured to enable, during cruising of the vehicle in the first geographical region based on the map dataset of the first geographical region stored in the autonomous driving domain, the autonomous driving function of the vehicle corresponding to the first geographical region when it is determined based on the region information that the vehicle is capable of performing autonomous driving in the first geographical region, the vehicle is currently not in an autonomous driving state, and the map dataset of the first geographical region stored in the autonomous driving domain is the updated map dataset, so that the vehicle performs autonomous driving in the first geographical region.

In some or all embodiments, the map data processing apparatus further includes a prompt module, configured to: generate second prompt information based on the updated map dataset of the second geographical region, the second prompt information being configured for prompting to enable the autonomous driving function when the vehicle travels to the second geographical region; and transmit the second prompt information to the cockpit domain, so that the cockpit domain displays the second prompt information.

In some or all embodiments, the prompt module is further configured to: control the vehicle to perform autonomous driving when the vehicle travels to the second geographical region, and output third prompt information, the third prompt information being configured for prompting that the vehicle is already in the autonomous driving state.

An embodiment of this application provides a computer program product. The computer program product includes a computer program or computer-executable instructions. The computer program or the computer-executable instructions are stored in a computer-readable storage medium. A processor of an electronic device reads the computer-executable instructions from the computer-readable storage medium. The processor executes the computer-executable instructions, so that the electronic device performs the map data processing method provided in the embodiments of this application.

An embodiment of this application provides a computer-readable storage medium, having computer-executable instructions stored therein. The computer-executable instructions, when executed by a processor, cause the processor to perform the map data processing method provided in the embodiments of this application, for example, the map data processing method shown in FIG. 4.

In some or all embodiments, the computer-readable storage medium may be a memory such as a read-only memory (ROM), a random access memory (RAM), an erasable programmable read-only memory (EPROM), a flash memory, a magnetic surface memory, an optical disk, or a CD-ROM; or may be various electronic devices including one or any combination of the foregoing memories.

In some or all embodiments, the computer-executable instructions may be written in a form of a program, software, a software module, a script, or code in any form of programming language (including compilation or interpretation language, or declarative or procedural language), and may be deployed in any form, including being deployed as an independent program or being deployed as a module, component, subroutine, or another unit suitable for use in a computing environment.

In an example, the computer-executable instructions may, but do not necessarily, correspond to a file in a file system, and may be stored in a part of a file that saves another program or other data, for example, stored in one or more scripts in a HyperText Markup Language (HTML) file, stored in a single file that is specially configured for a program in discussion, or stored in a plurality of collaborative files (for example, stored in files of one or more modules, subprograms, or code parts).

In the embodiment of this application, the term "module" or "unit" refers to a computer program with a preset function or a part of the computer program and works, together with other related parts, to implement a preset target, and may be completely or partially implemented by using software, hardware (for example, a processing circuit or a memory) or a combination thereof. Similarly, one processor (or a plurality of processors or memories) may be configured to implement one or more modules or units. In addition, each module or unit may be a part of an overall module or unit including a function of the module or unit.

In an example, the computer-executable instructions may be deployed to be executed on one electronic device, on a plurality of electronic devices located at one site, or on a plurality of electronic devices distributed at a plurality of locations and connected to each other by using a communication network.

In summary, the embodiments of this application have the following beneficial effects.
(1) In the process in which the vehicle travels based on the target navigation path, the autonomous driving domain obtains, during cruising of the vehicle in the first geographical region based on the region information transmitted by the cockpit domain, the updated map dataset of the second geographical region when it is determined based on the region information that the vehicle is capable of performing autonomous driving in the second geographical region and the map dataset of the second geographical region stored in the autonomous driving domain is updatable, to update the map dataset of the second geographical region stored in the autonomous driving domain, and enables the autonomous driving function of the vehicle in the second geographical region based on the updated version of the map dataset of the second geographical region. In this way, the version of the map dataset of the second geographical region is updated in advance when the vehicle does not travel into the second geographical region, so that the vehicle can efficiently perform autonomous driving based on the updated map dataset when traveling into the second geographical region. Therefore, the data version of the second geographical region is updated at best time, and full update of the map dataset of all the geographical regions each time is effectively avoided. In this way, the map dataset of the geographical regions is updated as required, and the autonomous driving function is accurately controlled to be released and enabled, so that the map dataset update efficiency can be effectively improved, improving the autonomous driving safety.
(2) In the process in which the vehicle travels based on the target navigation path, the autonomous driving domain receives the region information transmitted by the cockpit domain, so that the autonomous driving domain subsequently controls, based on the received region information, the vehicle whether to perform autonomous driving in a corresponding geographical region, effectively ensuring autonomous driving safety of the vehicle. In addition, the cockpit domain generates the region information, so that a calculation load of the autonomous driving domain is effectively reduced, and a calculation capability of the autonomous driving domain is effectively improved. Therefore, the autonomous driving domain can focus on calculation related to autonomous driving, more effectively ensuring autonomous driving safety of the vehicle.
(3) The first geographical region and the second geographical region are geographical regions through which the vehicle passes in sequence and that are on the target navigation path, and during cruising of the vehicle in the first geographical region, when it is determined based on the region information that the vehicle is capable of performing autonomous driving in the second geographical region, and the map dataset of the second geographical region stored in the autonomous driving domain is updatable, the updated map dataset of the second geographical region is obtained. In this way, a version of the map dataset of the second geographical region is updated in advance when the vehicle does not travel into the second geographical region, so that the vehicle can efficiently perform autonomous driving based on the updated map dataset when traveling into the second geographical region. Therefore, a data version of the second geographical region is updated at best time, and full update of map dataset of all geographical regions each time is effectively avoided. In this way, the map dataset of the geographical regions is updated as required, and an autonomous driving function is accurately controlled to be released and enabled, so that map dataset update efficiency is effectively improved.
(4) The target autonomous driving condition for the second geographical region is queried based on the mapping relationship, so that whether the vehicle is capable of performing autonomous driving in the second geographical region can be quickly determined, laying a data support for subsequent successful autonomous driving of the vehicle in the second geographical region.
(5) The cockpit domain generates the mapping relationship for the autonomous driving domain to use, so that the calculation load of the autonomous driving domain is effectively reduced, and the calculation capability of the autonomous driving domain is effectively improved. Therefore, the autonomous driving domain can focus on calculation related to autonomous driving, more effectively ensuring the autonomous driving safety of the vehicle.
(6) The map dataset of the second geographical region is updated when the distance is less than the distance threshold, to ensure that the vehicle can perform autonomous driving by using a new version of map dataset when traveling to the second geographical region (when the distance is greater than the distance threshold, a supplier of the map dataset may also perform data update, and when the distance is less than the distance threshold, performing data update can effectively obtain map dataset obtained by performing update when the distance is greater than the distance threshold), effectively improving the autonomous driving safety.
(7) When the distance between the current location and the geographical boundary line is less than the distance threshold, the autonomous driving function of the vehicle in the second geographical region is directly enabled based on the map dataset of the second geographical region stored in the autonomous driving domain, so that the autonomous driving function is already enabled before the vehicle travels to the second geographical region, effectively improving real-time performance of autonomous driving of the vehicle in the second geographical region, and effectively avoiding an unnecessary load brought to the autonomous driving domain due to premature enabling of the autonomous driving function. When the vehicle already performs autonomous driving in the first geographical region, reducing the load of the autonomous driving domain effectively improves the calculation capability of the autonomous driving domain, so that the autonomous driving domain can focus on calculation related to autonomous driving in the first geographical region, more effectively ensuring the autonomous driving safety of the vehicle.
(8) The autonomous driving function of the vehicle in the second geographical region is directly enabled based on the map dataset of the second geographical region stored in the autonomous driving domain, so that the autonomous driving function is already enabled before the vehicle travels to the second geographical region, effectively improving real-time performance of autonomous driving of the vehicle in the second geographical region. In addition, when the vehicle already performs autonomous driving in the first geographical region, enabling the autonomous driving function of the vehicle in the second geographical region in real time can ensure a quick response of the autonomous driving function when a speed of the vehicle is low, more effectively ensuring autonomous driving safety of the vehicle.
(9) During cruising of the vehicle in the first geographical region, when it is determined based on the region information that the vehicle is incapable of performing autonomous driving in the second geographical region, the first prompt information is outputted when the distance between the current location and the geographical boundary line is less than the distance threshold, so that when it is most likely that the autonomous driving function is triggered to be enabled before the vehicle travels to the second geographical region, it is prompted that the vehicle is incapable of performing autonomous driving in the second geographical region, effectively improving a prompt effect of the first prompt information.
(10) The first geographical region and the second geographical region are geographical regions through which the vehicle passes in sequence and that is on the navigation path, and during cruising of the vehicle in the first geographical region, when it is determined based on the region information that the vehicle is capable of performing autonomous driving in the first geographical region, and the map dataset of the first geographical region stored in the autonomous driving domain is not the latest version, the updated map dataset of the first geographical region is obtained. The autonomous driving function of the vehicle corresponding to the first geographical region is enabled based on the updated map dataset of the first geographical region, so that the vehicle performs autonomous driving in the first geographical region. In this way, a version of the map dataset of the second geographical region can be updated in real time when the vehicle does not travel into the second geographical region, so that the vehicle can efficiently perform autonomous driving based on the updated map dataset when traveling into the first geographical region. Therefore, a data version of the first geographical region is updated at best time, and full update of map dataset of all geographical regions each time is effectively avoided. In this way, the map dataset of the geographical regions is updated as required, and the autonomous driving function is accurately controlled to be released and enabled, so that data update efficiency is effectively improved.

The foregoing descriptions are only an example of this application and are not intended to limit the scope of protection of this application. Any modification, equivalent replacement, or improvement made within the spirit and scope of this application fall within the protection scope of this application.

## Claims

1. A map data processing method for a vehicle control system, the vehicle control system comprising an autonomous driving domain for controlling an autonomous driving function of a vehicle and a cockpit domain for receiving a navigation instruction to the vehicle, and the method comprising:
receiving, by the autonomous driving domain, region information transmitted by the cockpit domain during cruising of the vehicle based on a pre-defined navigation path, the pre-defined navigation path indicating at least a first geographical region and a second geographical region;
obtaining, during cruising of the vehicle in the first geographical region, an updated map dataset of the second geographical region when it is determined based on the region information that the vehicle is capable of performing autonomous driving in the second geographical region and that an existing map dataset of the second geographical region stored in the autonomous driving domain is updatable; and
enabling the autonomous driving function of the vehicle based on the updated map dataset of the second geographical region.

2. The method according to claim 1, wherein the region information comprises a target region identifier of the second geographical region, and before the obtaining an updated map dataset of the second geographical region, the method further comprises:
obtaining a mapping relationship between a region identifier of each geographical region and a corresponding autonomous driving condition, the autonomous driving condition indicating whether the vehicle is capable of performing autonomous driving in the corresponding geographical region; and
determining a target autonomous driving condition for the second geographical region based on the target region identifier and the mapping relationship,
the target autonomous driving condition indicating whether the vehicle is capable of performing autonomous driving in the second geographical region.

3. The method according to claim 1 or 2, wherein the obtaining a mapping relationship between a region identifier of each geographical region and a corresponding autonomous driving condition comprises:
transmitting a mapping relationship obtaining request to the cockpit domain, the mapping relationship obtaining request triggering the cockpit domain to generate the mapping relationship based on the target navigation path; and
receiving the mapping relationship from the cockpit domain.

4. The method according to any one of claims 1 to 3, wherein the region information comprises the updated dataset of the second geographical region, and before the obtaining an updated map dataset of the second geographical region, the method further comprises:
obtaining a data version of the existing map dataset of the second geographical region stored in the autonomous driving domain, and performing matching on the updated dataset and the data version to obtain a matching result,
the matching result indicating whether the existing map dataset of the second geographical region stored in the autonomous driving domain is the updated map data.

5. The method according to any one of claims 1 to 4, wherein before the obtaining an updated map dataset of the second geographical region, the method further comprises:
obtaining a current location of the vehicle in the first geographical region and a geographical boundary line between the first geographical region and the second geographical region; and
determining a distance between the current location and the geographical boundary line, and comparing the distance with a distance threshold to obtain a comparison result for indicating whether the distance is less than the distance threshold; and
the obtaining an updated map dataset of the second geographical region comprises:
obtaining the updated map dataset of the second geographical region when the comparison result indicates that the distance is less than the distance threshold.

6. The method according to any one of claims 1 to 5, wherein the method further comprises:
obtaining, during cruising of the vehicle in the first geographical region, a current location of the vehicle in the first geographical region and a geographical boundary line between the first geographical region and the second geographical region when it is determined based on the region information that the vehicle is capable of performing autonomous driving in the second geographical region and the map dataset of the second geographical region stored in the autonomous driving domain is the updated map data; and
enabling, based on the map dataset of the second geographical region stored in the autonomous driving domain when a distance between the current location and the geographical boundary line is less than a distance threshold, the autonomous driving function of the vehicle corresponding to the second geographical region.

7. The method according to any one of claims 1 to 6, wherein the method further comprises:
outputting, during cruising of the vehicle in the first geographical region, first prompt information when it is determined based on the region information that the vehicle is incapable of performing autonomous driving in the second geographical region,
the first prompt information prompting that the vehicle is incapable of performing autonomous driving in the second geographical region.

8. The method according to any one of claims 1 to 7, wherein the first geographical region is a geographical region in which a start point of the target navigation path is located, and the method further comprises:
obtaining, during cruising of the vehicle in the first geographical region, an updated map dataset of the first geographical region when it is determined based on the region information that the vehicle is capable of performing autonomous driving in the first geographical region and that an existing map dataset of the first geographical region stored in the autonomous driving domain is updatable; and
enabling, based on the updated map dataset of the first geographical region, an autonomous driving function of the vehicle corresponding to the first geographical region, so that the vehicle performs autonomous driving in the first geographical region.

9. The method according to any one of claims 1 to 8, wherein the first geographical region is a geographical region in which a start point of the target navigation path is located, and the method further comprises:
enabling, during cruising of the vehicle in the first geographical region based on the map dataset of the first geographical region stored in the autonomous driving domain, the autonomous driving function of the vehicle corresponding to the first geographical region when it is determined based on the region information that the vehicle is capable of performing autonomous driving in the first geographical region, the vehicle is currently not in an autonomous driving state, and the map dataset of the first geographical region stored in the autonomous driving domain is the updated map data, so that the vehicle performs autonomous driving in the first geographical region.

10. The method according to any one of claims 1 to 9, wherein after the enabling an autonomous driving function of the vehicle based on the updated map dataset of the second geographical region, the method further comprises:
generating second prompt information based on the updated map dataset of the second geographical region, the second prompt information prompting to enable the autonomous driving function when the vehicle travels to the second geographical region; and
transmitting the second prompt information to the cockpit domain for displaying the second prompt information.

11. The method according to any one of claims 1 to 10, wherein after the enabling an autonomous driving function of the vehicle based on the updated map dataset of the second geographical region, the method further comprises:
controlling the vehicle to perform autonomous driving when the vehicle travels to the second geographical region, and outputting third prompt information, the third prompt information prompting that the vehicle is in the autonomous driving state.

12. A map data processing method for a vehicle control system, the vehicle control system comprising an autonomous driving domain for controlling an autonomous driving function of a vehicle and a cockpit domain for receiving a navigation instruction to the vehicle, and the method comprising:
displaying, by the cockpit domain in response to the navigation instruction, a navigation path in a map;
determining at least two geographical regions indicated by the navigation path;
generating at least one piece of region information based on the geographical regions indicated by the navigation path, different region information corresponding to different geographical regions, and the region information being configured for determining whether the vehicle is capable of performing autonomous driving in a corresponding geographical region; and
transmitting the generated region information to the autonomous driving domain, so that the autonomous driving domain enables the autonomous driving function of the vehicle in the corresponding geographical region when determining that the vehicle is capable of performing autonomous driving in the corresponding geographical region.

13. A map data processing apparatus for a vehicle control system, the vehicle control system comprising an autonomous driving domain for controlling an autonomous driving function of a vehicle and a cockpit domain for receiving a navigation instruction to the vehicle, and the apparatus comprising:
a receiving module, configured to receive region information transmitted by the cockpit domain during cruising of the vehicle based on a pre-defined navigation path, the pre-defined navigation path indicating at least a first geographical region and a second geographical region;
an obtaining module, configured to obtain, during cruising of the vehicle in the first geographical region, an updated map dataset of the second geographical region when it is determined based on the region information that the vehicle is capable of performing autonomous driving in the second geographical region and that an existing map dataset of the second geographical region stored in the autonomous driving domain is updatable; and
an enabling module, configured to enable the autonomous driving function of the vehicle based on the updated map dataset of the second geographical region.

14. A map data processing apparatus for a vehicle control system, the vehicle control system comprising an autonomous driving domain for controlling an autonomous driving function of a vehicle and a cockpit domain for receiving a navigation instruction to the vehicle, and the apparatus comprising:
a display module, configured to display a navigation path in a map in response to the navigation instruction;
a determining module, configured to determine at least two geographical regions indicated by the navigation path;
a generation module, configured to generate at least one piece of region information based on the navigation path, different region information corresponding to different geographical regions, and the region information being configured for determining whether the vehicle is capable of performing autonomous driving in a corresponding geographical region; and
a transmission module, configured to transmit the generated region information to the autonomous driving domain, so that the autonomous driving domain enables the autonomous driving function of the vehicle in the corresponding geographical region when determining that the vehicle is capable of performing autonomous driving in the corresponding geographical region.

15. An electronic device, comprising:
a memory, configured to store computer-executable instructions or a computer program; and
a processor, configured to implement, when executing the computer-executable instructions or the computer program stored in the memory, the map data processing method according to any one of claims 1 to 12.

16. A computer-readable storage medium, having computer-executable instructions stored therein, the computer-executable instructions, when executed by a processor, implementing the map data processing method according to any one of claims 1 to 12.

17. A computer program product, comprising a computer program or computer-executable instructions, the computer program or the computer-executable instructions, when executed by a processor, implementing the map data processing method according to any one of claims 1 to 12.
